# EUROPEAN PATENT SPECIFICATION

(11) **EP 3 957 460 B1**
(45) Date of publication and mention of the grant of the patent: **18.10.2023**
(21) Application number: 20791655.2
(22) Date of filing: 15.04.2020
(51) Int. Cl.: B29C 45/76, B23Q 15/00

(54) **INJECTION MOLDING MACHINE SYSTEM AND CONTROLLER FOR INDUSTRIAL MACHINERY**
SPRITZGIESSMASCHINENSYSTEM UND STEUERGERÄT FÜR INDUSTRIELLE MASCHINEN
SYSTÈME DE MACHINE DE MOULAGE PAR INJECTION ET DISPOSITIF DE COMMANDE POUR MACHINES INDUSTRIELLES

(30) Priority: 16.04.2019 JP 2019078067
(43) Date of publication of application: 23.02.2022
(73) Proprietor: Sumitomo Heavy Industries, Ltd., Tokyo 141-6025 (JP)
(72) Inventor: TANIDA, Kazuki, Kanagawa 237-8555 (JP); MOGI, Hiroshi, Kanagawa 237-8555 (JP); ARITA, Mikio, Kanagawa 237-8555 (JP)
(74) Representative: Louis Pöhlau Lohrentz
(86) International application number: PCT/JP2020/016634
(87) International publication number: WO 2020/213663

(56) References cited:
- WO-A1-2018/159726
- WO-A1-2019/189011
- JP-A- 2017 105 136
- JP-A- 2018 206 113

## Description

### Technical Field

The present disclosure relates to an injection molding machine system.

### Background Art

For example, in some cases of an industrial machine such as an injection molding machine, data relating to an operation state (for example, output data from various sensors for detecting an operation state of a machine) may be collected to be provided for a user through a display unit (for example, refer to PTL 1). PTL 2 discloses an industrial machine system including a management device which includes multiple interface processing units respectively corresponding to a plurality of types of display screens. PTL 3 discloses a correcting device that calculates a correction value of a set value of molding conditions of an injection molding machine. PTL 4 discloses an injection molding machine including a controller which performs drive control of a drive unit and monitoring control.

### Citation List

### Patent Literature

[PTL 1] Japanese Unexamined Patent Publication No. JP 2017-105136 A
[PTL 2] United States Patent Publication No. US 2018/345555 A1
[PTL 3] International Patent Publication No. WO 2018/159726 A1
[PTL 4] International Patent Publication No. WO 2019/189011 A1

### Summary of Invention

### Technical Problem

However, processing capacity of a controller of the industrial machine is limited. Accordingly, the number of types of data that can be acquired is limited. Therefore, even when a user wants to set acquisition target data, the controller may not have remaining power in the processing capacity for data acquisition, or the user may not know how many types of the data can be set in the first place. Therefore, it is desirable that the user can more easily set desired data as an acquisition target.

Therefore, in view of the above-described problems, an object of the present disclosure is to provide a technique by which a user can more easily set acquisition target data, when data relating to an operation state of an industrial machine is acquired and provided for the user.

### Solution to Problem

According to an embodiment of the present disclosure, in order to achieve the above-described object, there is provided an injection molding machine system.

The injection molding machine system includes an injection molding machine having a mold clamping unit that performs mold clamping on a mold unit, an injection unit that fills the mold unit on which the mold clamping is performed by the mold clamping unit with a molding material, an ejector unit that extracts a molding product from the mold unit after the molding material filled by the injection unit is cooled and solidified, a control unit including a data acquisition unit that acquires target data from data relating to an operation state output by the injection molding machine itself, and records the target data in a storage unit, and a setting unit that sets the target data in response to a request from a user, and a display unit.

In a case where the setting unit sets the target data in response to the request of the user, the display unit displays a state of a processing load relating to data acquisition before and after the target data is set, or either before or after the target data is set.

In addition, according to another embodiment of the present disclosure, which does not form part of the present invention, there is provided a controller for an industrial machine.

The controller includes a data acquisition unit that acquires data relating to an operation state of the industrial machine which is output by a data output portion and records the acquired data in the storage unit.

The controller is provided separately from a control controller that controls an operation of the industrial machine.

### Advantageous Effects of Invention

According to the above-described embodiment, it is possible to provide a technique by which a user can more easily set acquisition target data when data relating to an operation state of an industrial machine is acquired and provided for the user.

### Brief Description of Drawings

Fig. 1A is a view illustrating an example of a configuration of an injection molding machine system.
Fig. 1B is a view illustrating an example of a configuration of the injection molding machine system.
Fig. 2 is a view illustrating a first example of a functional configuration relating to data collection of an injection molding machine.
Fig. 3 is a view illustrating an example of a collection data setting screen.
Fig. 4 is a view illustrating another example of the collection data setting screen.
Fig. 5 is a view illustrating still another example of the collection data setting screen.
Fig. 6 is a view illustrating an example of combined operation data.
Fig. 7 is a view illustrating a second example of a functional configuration relating to data collection of the injection molding machine.

### Description of Embodiments

Hereinafter, embodiments will be described with reference to the drawings.

Hereinafter, the embodiments will be described with reference to the drawings. However, in each drawing, the same or corresponding reference numerals may be assigned to the same or corresponding configurations, and description thereof may be omitted in some cases.

### (Outline of Injection Molding Machine System)

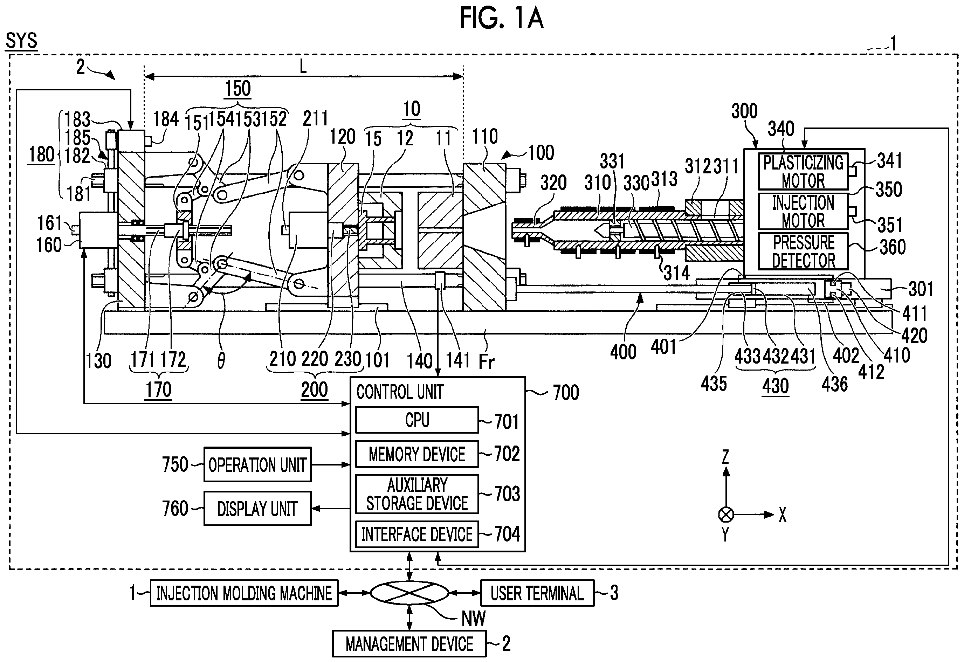

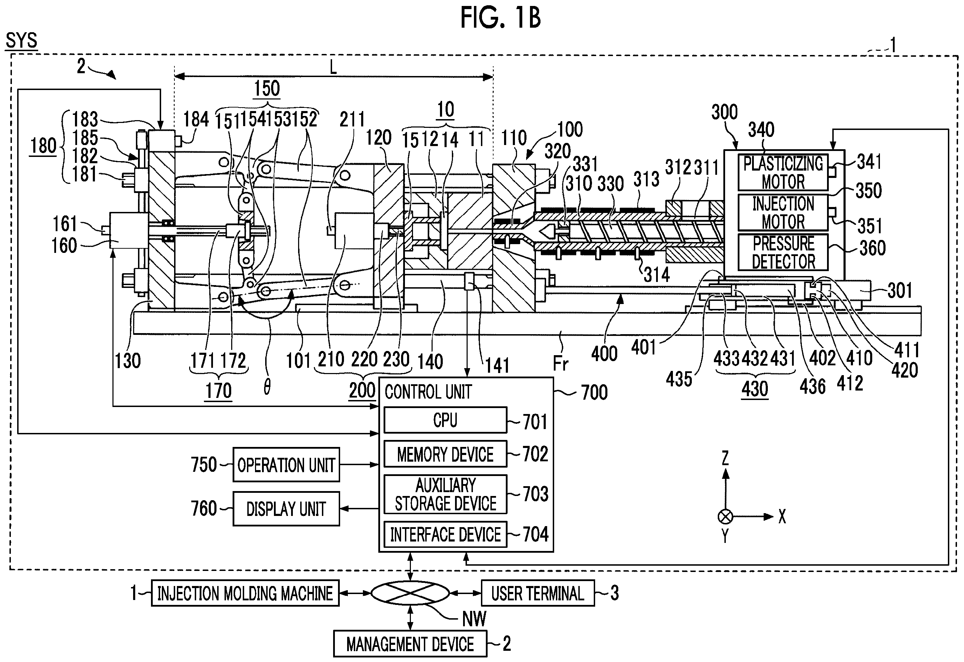

First, an outline of an injection molding machine system SYS according to the present embodiment will be described with reference to Fig. 1 (Figs. 1A and 1B).

Figs. 1A and 1B are views illustrating an example of the injection molding machine system SYS according to the present embodiment. Specifically, the injection molding machine 1 in Fig. 1A illustrates a state when mold opening is completed, and the injection molding machine 1 in Fig. 1B illustrates a state when mold clamping is performed. Hereinafter, in the drawings of the present embodiment, an X-axis, a Y-axis, and a Z-axis are perpendicular to each other. Positive and negative directions of the X-axis (hereinafter, simply referred to as an "X-direction") and positive and negative directions of the Y-axis (hereinafter, simply referred to as a "Y-direction") represent a horizontal direction, and positive and negative directions of the Z-axis (hereinafter, simply referred to as "Z-direction") represent a vertical direction.

The injection molding machine system SYS includes an injection molding machine 1, a management device 2, and a user terminal 3.

In this example, the number of the injection molding machines 1 included in the injection molding machine system SYS is two, but may be one, three, or more. In addition, the number of the management devices 2 included in the injection molding machine system SYS may be one, two, or more. In addition, the number of the user terminals 3 included in the injection molding machine system SYS may be one, two, or more.

### <Outline of Injection Molding Machine>

The injection molding machine 1 (an example of an industrial machine) performs a series of operations for obtaining a molding product.

In addition, the injection molding machine 1 is connected to the management device 2 and the user terminal 3 to be communicable therebetween through a predetermined communication line NW. In addition, the injection molding machine 1 may be connected to another injection molding machine 1 to be communicable therebetween through the communication line NW. For example, the communication line NW includes a local area network (LAN) inside a factory where the injection molding machine 1 is installed. The local area network may be wired or wireless. Alternatively, the local area network may adopt an aspect including both of these. In addition, for example, the communication line NW may include a wide area network (WAN) outside the factory where the injection molding machine 1 is installed. For example, the wide area network may include a mobile communication network having a base station as a terminal. For example, the mobile communication network may correspond to 4^{th} Generation (4G) including Long Term Evolution (LTE) or 5^{th} Generation (5G). In addition, for example, the wide area network may include a satellite communication network that uses a communication satellite. In addition, for example, the wide area network may include an Internet network. In addition, for example, the communication line NW may include a short-range wireless communication line corresponding to Bluetooth (registered trademark) communication or WiFi communication.

For example, the injection molding machine 1 transmits (uploads) data relating to an operation state (hereinafter, referred to as "operation data") of the injection molding machine 1 (own machine) to the management device 2 through the communication line NW. In this manner, the management device 2 (or a manager or a worker thereof) can identify the operation state, and can manage a maintenance timing of the injection molding machine 1 or an operation schedule of the injection molding machine 1. In addition, based on the operation data of the injection molding machine 1, the management device 2 generates data relating to control of the injection molding machine 1 (for example, a molding condition), and transmits the data to the injection molding machine 1. In this manner, the management device 2 can perform controlling relating to the injection molding machine 1 from an outside location.

In addition, for example, as a master machine, the injection molding machine 1 may monitor or control an operation of another injection molding machine 1 serving as a slave machine through the communication line NW. Specifically, the injection molding machine 1 (slave machine) may transmit operation data to the injection molding machine 1 (master machine) through the communication line NW. In this manner, the injection molding machine 1 (master machine) can monitor the operation of the other injection molding machine 1 (slave machine) . In addition, based on the operation data, while the injection molding machine 1 (master machine) identifies the operation state of the other injection molding machine 1 (slave machine), the injection molding machine 1 (master machine) may transmit a control command relating to the operation to the other injection molding machine 1 (slave machine) through the communication line NW. In this manner, the injection molding machine 1 (master machine) can control the operation of the other injection molding machine 1 (slave machine) . In this case, the injection molding machine 1 (master machine) may control the operation of the other injection molding machine 1 (slave machine) to be synchronized with the operation of the own machine.

### <Outline of Management Device>

As described above, the management device 2 (an example of a host external device) is connected to the injection molding machine 1 to be communicable therebetween through the communication line NW. In addition, the management device 2 may be connected to the user terminal 3 to be communicable therebetween through the communication line NW.

For example, the management device 2 is a cloud server installed in a remote location such as a management center outside a factory where the injection molding machine 1 is installed. In addition, for example, the management device 2 may be an edge server installed inside the factory where the injection molding machine 1 is installed or in a place relatively close to the factory (for example, communication facilities such as a radio base station or a station building close to the factory) . In addition, the management device 2 may be a terminal device (for example, a desktop computer terminal) inside the factory where the injection molding machine 1 is installed. In addition, the management device 2 may be a mobile terminal (for example, a smartphone, a tablet terminal, or a laptop computer terminal) that can be carried by a manager of the injection molding machine 1.

For example, based on the data transmitted (uploaded) from the injection molding machine 1, the management device 2 may identify the operation state of the injection molding machine 1, and may manage the operation state of the injection molding machine 1. Based on the identified operation state of the injection molding machine 1, the management device 2 may perform various diagnoses such as an abnormality diagnosis of the injection molding machine 1.

In addition, for example, the management device 2 may transmit control data (for example, data relating to various setting conditions such as molding conditions) to the injection molding machine 1 through the communication line NW. In this manner, the management device 2 can control the operation of the injection molding machine 1.

### <Outline of User Terminal>

As described above, the user terminal 3 (an example of a terminal device that can be used by the user) is connected to the injection molding machine 1 and the management device 2 to be communicable therebetween through the communication line NW.

The user terminal 3 is used by a user of the injection molding machine system SYS. The user of the injection molding machine system SYS includes a user of the injection molding machine 1, such as a worker who operates the injection molding machine 1 and a serviceman who carries out maintenance work for the injection molding machine 1. In addition, the user of the injection molding machine system SYS includes a user of the management device 2, such as a manager and a worker of the management device 2.

For example, the user terminal 3 may be a mobile terminal such as a smartphone, a tablet terminal, and a laptop computer terminal. In addition, for example, the user terminal 3 may be a stationary terminal device such as a desktop computer terminal.

For example, the user terminal 3 may have a display unit such as a liquid crystal display and an organic EL display, and may provide the user with information relating to the injection molding machine 1 through the display unit. For example, the information relating to the injection molding machine 1 includes information relating to an operation state of the injection molding machine 1. Specifically, for example, the user terminal 3 may have an input device such as an operation input device, a voice input device, and a gesture input device, and may transmit a request signal for providing information to the injection molding machine 1 or the management device 2 in response to a predetermined input (that is, a request from the user) received from the user through the input device. Then, the injection molding machine 1 or the management device 2 may deliver data including target information (for example, operation data corresponding to the information relating to the operation state) to the user terminal 3 which is a transmission origin of the request signal, in response to the request signal received from the user terminal 3. In this manner, the user terminal 3 can provide the user with the information relating to the injection molding machine 1, based on the data received from the injection molding machine 1 or the management device 2.

In addition, for example, the user terminal 3 may perform setting relating to the injection molding machine 1 in response to a predetermined input from the user which is received through the input device. For example, the setting relating to the injection molding machine 1 includes setting relating to a molding condition of the injection molding machine 1. In addition, for example, the setting relating to the injection molding machine 1 includes setting relating to collection target data (to be described later). Specifically, for example, the user terminal 3 may perform setting relating to the injection molding machine 1 in response to a predetermined input to a predetermined setting screen of the display unit, which is received from the user through the input device. Then, the user terminal 3 may transmit determined setting contents relating to the injection molding machine 1 to the target injection molding machine 1. In this manner, the injection molding machine 1 can perform setting for the own machine in accordance with the received setting contents. Therefore, the user terminal 3 can reflect the setting contents set in accordance with an operation of the user on the injection molding machine 1.

### [Configuration of Injection Molding Machine]

Next, a configuration of the injection molding machine 1 will be described with reference to Figs. 1A and 1B.

The injection molding machine 1 includes a mold clamping unit 100, an ejector unit 200, an injection unit 300, a moving unit 400, and a control unit 700.

### <Mold Clamping Unit>

The mold clamping unit 100 performs mold closing, mold clamping, and mold opening of the mold unit 10. For example, the mold clamping unit 100 is a horizontal type, and a mold opening and closing direction is a horizontal direction. The mold clamping unit 100 has a stationary platen 110, a movable platen 120, a toggle support 130, a tie bar 140, a toggle mechanism 150, a mold clamping motor 160, a motion conversion mechanism 170, and a mold space adjustment mechanism 180.

Hereinafter, in describing the mold clamping unit 100, a moving direction of the movable platen 120 during mold closing (rightward direction in Figs. 1A and 1B) will be defined as forward, and a moving direction of the movable platen 120 during mold opening (leftward direction in Figs. 1A and 1B) will be defined as rearward.

The stationary platen 110 is fixed to a frame Fr. The stationary mold 11 is attached to a facing surface of the stationary platen 110 which faces the movable platen 120.

The movable platen 120 is movable with respect to the frame Fr in the mold opening and closing direction. A guide 101 that guides the movable platen 120 is laid on the frame Fr. The movable mold 12 is attached to a facing surface of the movable platen 120 which faces the stationary platen 110.

Since the movable platen 120 is advanced and retreated with respect to the stationary platen 110, the mold closing, the mold clamping, and the mold opening are performed. The mold unit 10 is configured to include the stationary mold 11 and the movable mold 12.

The toggle support 130 is connected to the stationary platen 110 at an interval therebetween, and is mounted on the frame Fr to be movable in the mold opening and closing direction. The toggle support 130 may be movable along the guide laid on the frame Fr. The guide of the toggle support 130 may be common to the guide 101 of the movable platen 120.

In the present embodiment, the stationary platen 110 is fixed to the frame Fr, and the toggle support 130 is movable with respect to the frame Fr in the mold opening and closing direction. However, the toggle support 130 may be fixed to the frame Fr, and the stationary platen 110 may be movable with respect to the frame Fr in the mold opening and closing direction.

The tie bar 140 connects the stationary platen 110 and the toggle support 130 to each other at an interval L in the mold opening and closing direction. A plurality of (for example, four) tie bars 140 may be used. The plurality of tie bars 140 are disposed parallel to each other in the mold opening and closing direction, and extend in accordance with a mold clamping force. At least one of the tie bars 140 is provided with a tie bar strain detector 141 that detects a strain of the tie bar 140. The tie bar strain detector 141 transmits a signal indicating a detection result thereof to the control unit 700. The detection result of the tie bar strain detector 141 is used in detecting the mold clamping force.

In the present embodiment, as a mold clamping force detector for measuring the mold clamping force, the tie bar strain detector 141 is used. However, the present invention is not limited thereto. The mold clamping force detector is not limited to a strain gauge type, and may be a piezoelectric type, a capacitive type, a hydraulic type, or an electromagnetic type. An attachment position thereof is not limited to the tie bar 140.

The toggle mechanism 150 is disposed between the movable platen 120 and the toggle support 130, and moves the movable platen 120 with respect to the toggle support 130 in the mold opening and closing direction. The toggle mechanism 150 is configured to include a crosshead 151 and a pair of link groups. Each of the link groups has a first link 152 and a second link 153 which are flexibly connected by a pin. The first link 152 is attached to the movable platen 120 to be capable of oscillating by a pin, and the second link 153 is attached to the toggle support 130 to be capable of oscillating by a pin. The second link 153 is attached to the crosshead 151 via a third link 154. When the crosshead 151 is advanced and retreated with respect to the toggle support 130, the first link 152 and the second link 153 are bent and stretched so that the movable platen 120 is advanced and retreated with respect to the toggle support 130.

A configuration of the toggle mechanism 150 is not limited to a configuration illustrated in Figs. 1A and 1B. For example, in Figs. 1A and 1B, the number of nodes in each of the link groups is five, but may be four. One end portion of the third link 154 may be coupled to the node between the first link 152 and the second link 153.

The mold clamping motor 160 is attached to the toggle support 130, and operates the toggle mechanism 150. The mold clamping motor 160 advances and retreats the crosshead 151 with respect to the toggle support 130. In this manner, the first link 152 and second link 153 are bent and stretched so that the movable platen 120 is advanced and retreated with respect to the toggle support 130. The mold clamping motor 160 is directly connected to the motion conversion mechanism 170, but may be connected to the motion conversion mechanism 170 via a belt or a pulley.

The motion conversion mechanism 170 converts a rotary motion of the mold clamping motor 160 into a linear motion of the crosshead 151. The motion conversion mechanism 170 includes a screw shaft 171 and a screw nut 172 screwed to the screw shaft 171. A ball or a roller may be interposed between the screw shaft 171 and the screw nut 172.

The mold clamping unit 100 performs a mold closing process, a mold clamping process, and a mold opening process under the control of the control unit 700.

In the mold closing process, the mold clamping motor 160 is driven to advance the movable platen 120 by advancing the crosshead 151 to a mold closing completion position at a set speed. In this manner, the movable mold 12 is caused to touch the stationary mold 11. For example, a position or a speed of the crosshead 151 is detected by using a mold clamping motor encoder 161. The mold clamping motor encoder 161 detects rotation of the mold clamping motor 160, and transmits a signal indicating a detection result thereof to the control unit 700.

A crosshead position detector for detecting the position of the crosshead 151 and a crosshead speed detector for measuring the speed of the crosshead 151 are not limited to the mold clamping motor encoder 161, and a general detector can be used. In addition, a movable platen position detector for detecting the position of the movable platen 120 and a movable platen speed detector for measuring the speed of the movable platen 120 are not limited to the mold clamping motor encoder 161, and a general detector can be used.

In the mold clamping process, the mold clamping motor 160 is further driven to further advance the crosshead 151 from the mold closing completion position to a mold clamping position, thereby generating a mold clamping force. During the mold clamping, a cavity space 14 is formed between the movable mold 12 and the stationary mold 11, and any one of the injection unit 300 and the second injection unit 500 fills the cavity space 14 with a liquid molding material. A molding product is obtained by solidifying the molding material filled therein. The number of the cavity spaces 14 may be two or more. In this case, a plurality of the molding products can be obtained at the same time.

In the mold opening process, the mold clamping motor 160 is driven to retreat the movable platen 120 by retreating the crosshead 151 to the mold opening completion position at a set speed. In this manner, the movable platen 120 is retreated so that the movable mold 12 is separated from the stationary mold 11. Thereafter, the ejector unit 200 ejects the molding product from the movable mold 12.

Setting conditions in the mold closing process and the mold clamping process are collectively set as a series of setting conditions. For example, the speed or the position of the crosshead 151 (including a mold closing start position, a speed switching position, a mold closing completion position, and a mold clamping position) and the mold clamping force in the mold closing process and the mold clamping process are collectively set as a series of setting conditions. The mold closing start position, the speed switching position, the mold closing completion position, and the mold clamping position are aligned in this order from a rear side toward a front side, and represent a start point and an end point of a section in which the speed is set. The speed is set for each section. The number of the speed switching positions may be one or more. The speed switching position may not be set. Only one of the mold clamping position and the mold clamping force may be set.

In addition, the setting conditions in the mold opening process are set in the same manner. For example, the speed or the position (including the mold opening start position, the speed switching position, and the mold opening completion position) of the crosshead 151 in the mold opening process are collectively set as a series of setting conditions. The mold opening start position, the speed switching position, and the mold opening completion position are aligned in this order from the front side toward the rear side, and represent the start point and the end point of the section in which the speed is set. The speed is set for each section. The number of the speed switching positions may be one or more. The speed switching position may not be set. The mold opening start position and the mold clamping position may be the same position. In addition, the mold opening completion position and the mold closing start position may be the same position.

Instead of the speed or the position of the crosshead 151, the speed or the position of the movable platen 120 may be set. In addition, instead of the position (for example, the mold clamping position) of the crosshead or the position of the movable platen, the mold clamping force may be set.

Incidentally, the toggle mechanism 150 amplifies a driving force of the mold clamping motor 160, and transmits the driving force to the movable platen 120. An amplification magnification is referred to as a toggle magnification. The toggle magnification is changed according to an angle θ (hereinafter, also referred to as a "link angle θ") formed by the first link 152 and the second link 153. The link angle θ is obtained from the position of the crosshead 151. When the link angle θ is 180°, the toggle magnification is maximized.

When a thickness of the mold unit 10 is changed due to replacement of the mold unit 10 or a temperature change in the mold unit 10, a mold space is adjusted so that a predetermined mold clamping force is obtained during the mold clamping. For example, in the mold space adjustment, an interval L between the stationary platen 110 and the toggle support 130 is adjusted so that the link angle θ of the toggle mechanism 150 becomes a predetermined angle when the movable mold 12 touches the stationary mold 11.

The mold clamping unit 100 has the mold space adjustment mechanism 180 that adjusts a mold space by adjusting the interval L between the stationary platen 110 and the toggle support 130. For example, the mold space adjustment mechanism 180, has a screw shaft 181 formed in a rear end portion of the tie bar 140, a screw nut 182 held to be rotatable by the toggle support 130, and a mold space adjustment motor 183 that rotates the screw nut 182 screwed to the screw shaft 181.

The screw shaft 181 and the screw nut 182 are provided for each of the tie bars 140. The rotation of the mold space adjustment motor 183 may be transmitted to a plurality of the screw nuts 182 via a rotation transmission unit 185. The plurality of screw nuts 182 can be rotated in synchronization with each other.

The plurality of screw nuts 182 can be individually rotated by changing a transmission path of the rotation transmission unit 185.

For example, the rotation transmission unit 185 is configured to include a gear. In this case, a driven gear is formed on an outer periphery of each of the screw nuts 182, and a driving gear is attached to an output shaft of the mold space adjustment motor 183. A plurality of the driven gears and an intermediate gear meshing with the driving gear are held to be rotatable in a central portion of the toggle support 130.

The rotation transmission unit 185 may be configured to include a belt or a pulley instead of the gear.

An operation of the mold space adjustment mechanism 180 is controlled by the control unit 700. The control unit 700 drives the mold space adjustment motor 183, and rotates the screw nut 182. In this manner, the control unit 700 adjusts the position of the toggle support 130 for holding the screw nut 182 to be rotatable with respect to a stationary platen 110, and adjusts the interval L between the stationary platen 110 and the toggle support 130.

The interval L is detected by using the mold space adjustment motor encoder 184. The mold space adjustment motor encoder 184 detects a rotation amount or a rotation direction of the mold space adjustment motor 183, and transmits a signal indicating a detection result thereof to the control unit 700. The detection result of the mold space adjustment motor encoder 184 is used in monitoring or controlling the position or the interval L of the toggle support 130.

A toggle support position detector for detecting the position of the toggle support 130 and an interval detector for detecting the interval L are not limited to the mold space adjustment motor encoder 184, and a general detector can be used.

The mold space adjustment mechanism 180 adjusts the interval L by rotating one of the screw shaft 181 and the screw nut 182 which are screwed to each other. A plurality of the mold space adjustment mechanisms 180 may be used, or a plurality of mold space adjustment motors 183 may be used.

The mold clamping unit 100 of the present embodiment is a horizontal type in which the mold opening and closing direction is a horizontal direction, but may be a vertical type in which the mold opening and closing direction is an upward-downward direction.

In addition, the mold clamping unit 100 of the present embodiment has the mold clamping motor 160 as a drive source. However, a hydraulic cylinder may be provided instead of the mold clamping motor 160. In addition, the mold clamping unit 100 may have a linear motor for mold opening and closing, and may have an electromagnet for mold clamping.

### <Ejector Unit>

The ejector unit 200 ejects (extracts) the molding product from the mold unit 10 after the molding material filled in the mold unit 10 is cooled and solidified by the injection unit 300. The ejector unit 200 has an ejector motor 210, a motion conversion mechanism 220, and an ejector rod 230.

Hereinafter, in describing the ejector unit 200, as in the description of the mold clamping unit 100, a moving direction of the movable platen 120 during the mold closing (rightward direction in Figs. 1A and 1B) will be defined as forward, and a moving direction of the movable platen 120 during the mold opening (leftward direction in Figs. 1A and 1B) will be defined as rearward.

The ejector motor 210 is attached to the movable platen 120. The ejector motor 210 is directly connected to the motion conversion mechanism 220, but may be connected to the motion conversion mechanism 220 via a belt or a pulley.

The motion conversion mechanism 220 converts a rotary motion of the ejector motor 210 into a linear motion of the ejector rod 230. The motion conversion mechanism 220 includes a screw shaft and a screw nut screwed to the screw shaft. A ball or a roller may be interposed between the screw shaft and the screw nut.

The ejector rod 230 is freely advanced and retreated in a through-hole of the movable platen 120. A front end portion of the ejector rod 230 comes into contact with a movable member 15 disposed to be freely advanced and retreated inside the movable mold 12. The front end portion of the ejector rod 230 may be connected to or may not be connected to the movable member 15.

The ejector unit 200 performs an ejection process under the control of the control unit 700.

In the ejection process, the ejector motor 210 is driven so that the ejector rod 230 is advanced from a standby position to an ejection position at a set speed. In this manner, the movable member 15 is advanced to eject the molding product. Thereafter, the ejector motor 210 is driven so that the ejector rod 230 is retreated at a set speed, and the movable member 15 is retreated to an original standby position. For example, a position or a speed of the ejector rod 230 is detected by using an ejector motor encoder 211. The ejector motor encoder 211 detects the rotation of the ejector motor 210, and transmits a signal indicating a detection result thereof to the control unit 700.

An ejector rod position detector for detecting the position of the ejector rod 230, and an ejector rod speed detector for measuring the speed of the ejector rod 230 are not limited to the ejector motor encoder 211, and a general detector can be used.

### <Injection Unit>

The injection unit 300 fills the mold unit 10 subjected to mold clamping by the mold clamping unit 100 with a molding material. Specifically, the injection unit 300 is installed in slide base 301 which is freely advanced and retreated with respect to the frame Fr, and is freely advanced and retreated with respect to the mold unit 10. The injection unit 300 touches the mold unit 10, and fills the cavity space 14 inside the mold unit 10 with the molding material. For example, the injection unit 300 has a cylinder 310, a nozzle 320, a screw 330, a plasticizing motor 340, an injection motor 350, and a pressure detector 360.

Hereinafter, in describing the injection unit 300, a direction in which the injection unit 300 is moved close to the mold unit 10 (leftward direction in Figs. 1A and 1B) will be defined as forward, and a direction in which the injection unit 300 is moved away from the mold unit 10 (rightward direction in Figs. 1A and 1B) will be defined as rearward.

The cylinder 310 heats the molding material supplied into the cylinder 310 from a feed port 311. For example, the molding material includes a resin. For example, the molding material is formed in a pellet shape, and is supplied to the feed port 311 in a solid state. The feed port 311 is formed in a rear portion of the cylinder 310. A cooler 312 such as a water-cooling cylinder is provided on an outer periphery in a rear portion of the cylinder 310. In front of the cooler 312, a heating unit 313 such as a band heater and a temperature measurer 314 are provided on the outer periphery of the cylinder 310.

The cylinder 310 is divided into a plurality of zones in the axial direction (for example, a rightward-leftward direction in Figs. 1A and 1B) of the cylinder 310. The heating unit 313 and the temperature measurer 314 are provided in each of the zones. In each of the zones, the control unit 700 controls the heating unit 313 so that a measurement temperature of the temperature measurer 314 reaches a set temperature.

The nozzle 320 is provided in a front end portion of the cylinder 310, and is pressed against the mold unit 10. The heating unit 313 and the temperature measurer 314 are provided on the outer periphery of the nozzle 320. The control unit 700 controls the heating unit 313 so that a measurement temperature of the nozzle 320 reaches a set temperature.

The screw 330 is disposed to be rotatable and to be freely advanced and retreated inside the cylinder 310. When the screw 330 is rotated, the molding material is fed forward along a helical groove of the screw 330. The molding material is gradually melted by heat from the cylinder 310 while being fed forward. As the liquid molding material is fed forward of the screw 330 and is accumulated in a front portion of the cylinder 310, the screw 330 is retreated. Thereafter, when the screw 330 is advanced, the liquid molding material accumulated in front of the screw 330 is injected from the nozzle 320, and the inside of the mold unit 10 is filled with the liquid molding material.

As a backflow prevention valve for preventing a backflow of the molding material fed rearward from the front of the screw 330 when the screw 330 is pressed forward, a backflow prevention ring 331 is attached to the front portion of the screw 330 to be freely advanced and retreated.

The backflow prevention ring 331 is pressed rearward by the pressure of the molding material in front of the screw 330 when the screw 330 is advanced, and is relatively retreated with respect to the screw 330 to a close position (refer to Fig. 1B) for closing a flow path of the molding material. In this manner, the molding material accumulated in the front of the screw 330 is prevented from flowing rearward.

On the other hand, the backflow prevention ring 331 is pressed forward by the pressure of the molding material fed forward along the helical groove of the screw 330 when the screw 330 is rotated, and is relatively advanced with respect to the screw 330 to an open position (refer to Fig. 1A) for opening the flow path of the molding material. In this manner, the molding material is fed forward of the screw 330.

The backflow prevention ring 331 may be either a co-rotation type rotating together with the screw 330 or a non-co-rotation type that does not rotate together with the screw 330.

The injection unit 300 may have a drive source that advances and retreats the backflow prevention ring 331 with respect to the screw 330 between the open position and the close position.

The plasticizing motor 340 rotates the screw 330. The drive source for rotating the screw 330 is not limited to the plasticizing motor 340, and may be a hydraulic pump, for example.

The injection motor 350 advances and retreats the screw 330. A motion conversion mechanism that converts a rotary motion of the injection motor 350 into a linear motion of the screw 330 is provided between the injection motor 350 and the screw 330. For example, the motion conversion mechanism has a screw shaft and a screw nut screwed to the screw shaft. A ball or a roller may be provided between the screw shaft and the screw nut. The drive source that advances and retreats the screw 330 is not limited to the injection motor 350, and may be a hydraulic cylinder, for example.

The pressure detector 360 measures a pressure transmitted between the injection motor 350 and the screw 330. The pressure detector 360 is provided in a force transmission path between the injection motor 350 and the screw 330, and measures the pressure acting on the pressure detector 360.

The pressure detector 360 transmits a signal indicating a detection result thereof to the control unit 700. The detection result of the pressure detector 360 is used in controlling or monitoring the pressure received by the screw 330 from the molding material, a back pressure acting on the screw 330, or the pressure acting on the molding material from the screw 330.

The injection unit 300 performs a plasticizing process, a filling process, and a holding pressure process under the control of the control unit 700.

In the plasticizing process, the plasticizing motor 340 is driven to rotate the screw 330 at a set rotation speed, and the molding material is fed forward along the helical groove of the screw 330. Through the process, the molding material is gradually melted. As the liquid molding material is fed forward of the screw 330 and is accumulated in a front portion of the cylinder 310, the screw 330 is retreated. For example, a rotation speed of the screw 330 is measured by using a plasticizing motor encoder 341. The plasticizing motor encoder 341 detects the rotation of the plasticizing motor 340, and transmits a signal indicating a detection result thereof to the control unit 700.

A screw rotation speed detector for measuring the rotation speed of the screw 330 is not limited to the plasticizing motor encoder 341, and a general detector can be used.

In the plasticizing process, the injection motor 350 may be driven to apply a preset back pressure to the screw 330 in order to limit sudden retreat of the screw 330. The back pressure applied to the screw 330 is measured by using the pressure detector 360, for example. The pressure detector 360 transmits a signal indicating a detection result thereof to the control unit 700. When the screw 330 is retreated to a plasticizing completion position and a predetermined amount of the molding material is accumulated in front of the screw 330, the plasticizing process is completed.

In the filling process, the injection motor 350 is driven to advance the screw 330 at a set speed, and the liquid molding material accumulated in front of the screw 330 fills the cavity space 14 inside the mold unit 10. The position or the speed of the screw 330 is detected by using an injection motor encoder 351, for example. The injection motor encoder 351 detects the rotation of the injection motor 350, and transmits a signal indicating a detection result thereof to the control unit 700. When the position of the screw 330 reaches a set position, the filling process is switched to a holding pressure process (so-called V/P switching) . The position where the V/P switching is performed will be referred to as a V/P switching position. The set speed of the screw 330 may be changed depending on the position or a time of the screw 330.

When the position of the screw 330 reaches the set position in the filling process, the screw 330 may be temporarily stopped at the set position, and thereafter, the V/P switching may be performed. Immediately before the V/P switching, instead of stopping the screw 330, the screw 330 may be advanced at a low speed, or may be retreated at a low speed. In addition, a screw position detector for detecting the position of the screw 330 and a screw speed detector for measuring the speed of the screw 330 are not limited to the injection motor encoder 351, and a general detector can be used.

In the holding pressure process, the injection motor 350 is driven to press the screw 330 forward. A pressure (hereinafter, also referred to as a "holding pressure") of the molding material in the front end portion of the screw 330 is maintained at a set pressure, and the molding material remaining inside the cylinder 310 is pressed toward the mold unit 10. The molding material which is insufficient due to cooling shrinkage inside the mold unit 10 can be replenished. The holding pressure is measured by using the pressure detector 360, for example. The pressure detector 360 transmits a signal indicating a detection result thereof to the control unit 700. A set value of the holding pressure may be changed depending on an elapsed time from the start of the holding pressure process.

In the holding pressure process, the molding material in the cavity space 14 inside the mold unit 10 is gradually cooled, and when the holding pressure process is completed, an inlet of the cavity space 14 is closed by the solidified molding material. This state is referred to as gate seal, and prevents the backflow of the molding material from the cavity space 14. After the holding pressure process, a cooling process starts. In the cooling process, the molding material inside the cavity space 14 is solidified. In order to shorten a molding cycle time, the plasticizing process may be performed during the cooling process.

The injection unit 300 of the present embodiment is an in-line screw type, but may be a pre-plastic type. The injection unit of the pre-plastic type supplies the molding material melted inside a plasticizing cylinder to an injection cylinder, and the molding material is injected into the mold unit from the injection cylinder. The screw inside plasticize cylinder is disposed to be rotatable or to be rotatable and to be freely advanced and retreated. A plunger is disposed to be freely advanced and retreated inside the injection cylinder.

In addition, the injection unit 300 of the present embodiment is a horizontal type in which the axial direction of the cylinder 310 is a horizontal direction, but may be a vertical type in which the axial direction of the cylinder 310 is an upward-downward direction. The mold clamping unit combined with the injection unit 300 of the vertical type may be the vertical type or the horizontal type. Similarly, the mold clamping unit combined with the injection unit 300 of the horizontal type may be the horizontal type or the vertical type.

### <Moving Unit>

The moving unit 400 advances and retreats the injection unit 300 with respect to the mold unit 10. In addition, the moving unit 400 presses the nozzle 320 against the mold unit 10, thereby generating a nozzle touch pressure. The moving unit 400 includes a hydraulic pump 410, a motor 420 serving as a drive source, and a hydraulic cylinder 430 serving as a hydraulic actuator.

Hereinafter, in describing the moving unit 400, as in the description of the injection unit 300, a direction in which the injection unit 300 is moved close to the mold unit 10 (leftward direction in Figs. 1A and 1B) will be defined as forward, and a direction in which the injection unit 300 is moved away from the mold unit 10 (rightward direction in Figs. 1A and 1B) will be defined as rearward.

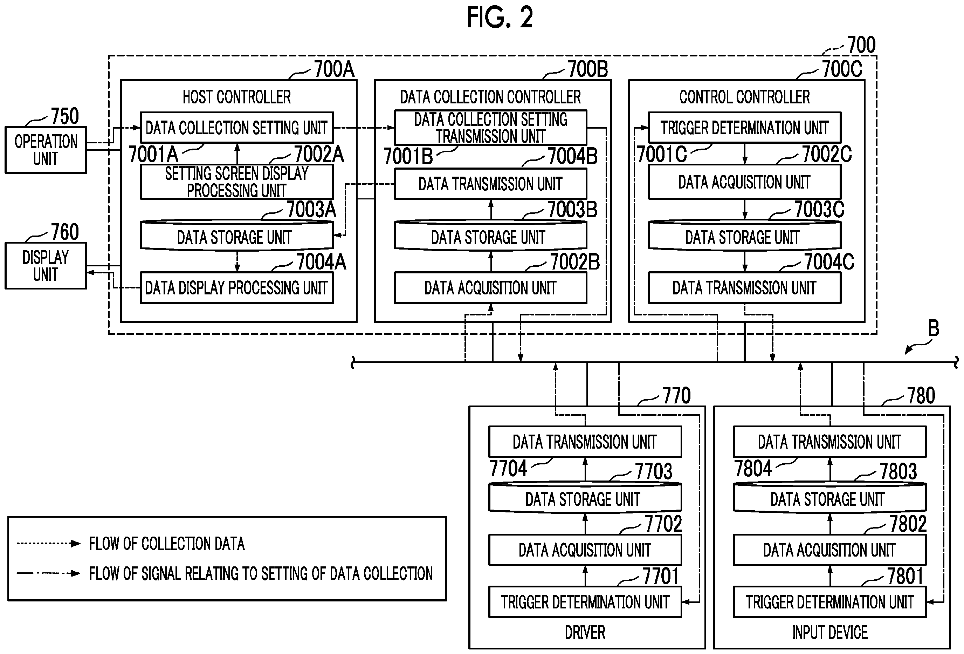

The moving unit 400 is disposed on one side of the cylinder 310 of the injection unit 300 in Fig. 2, but may be disposed on both sides of the cylinder 310, or may be disposed symmetrically around the cylinder 310.

The hydraulic pump 410 has a first port 411 and a second port 412. The hydraulic pump 410 is a pump that can rotate in both directions, and switches rotation directions of the motor 420. In this manner, a hydraulic fluid (for example, oil) is suctioned from any one of the first port 411 and the second port 412, and is discharged from the other, thereby generating a hydraulic pressure. The hydraulic pump 410 can suction the hydraulic fluid from a tank, and can discharge the hydraulic fluid from any one of the first port 411 and the second port 412.

The motor 420 operates the hydraulic pump 410. The motor 420 drives the hydraulic pump 410 in a rotation direction and with a rotation torque in accordance with a control signal transmitted from the control unit 700. The motor 420 may be an electric motor, or may be an electric servo motor.

The hydraulic cylinder 430 has a cylinder body 431, a piston 432, and a piston rod 433. The cylinder body 431 is fixed to the injection unit 300. The piston 432 partitions the inside of the cylinder body 431 into a front chamber 435 serving as a first chamber and a rear chamber 436 serving as a second chamber. The piston rod 433 is fixed to the stationary platen 110.

The front chamber 435 of the hydraulic cylinder 430 is connected to the first port 411 of the hydraulic pump 410 via a first flow path 401. The hydraulic fluid discharged from the first port 411 is supplied to the front chamber 435 via the first flow path 401. In this manner, the injection unit 300 is pressed forward. The injection unit 300 is advanced, and the nozzle 320 is pressed against the stationary mold 11. The front chamber 435 functions as a pressure chamber that generates the nozzle touch pressure of the nozzle 320 by the pressure of the hydraulic fluid supplied from the hydraulic pump 410.

On the other hand, the rear chamber 436 of the hydraulic cylinder 430 is connected to the second port 412 of the hydraulic pump 410 via a second flow path 402. The hydraulic fluid discharged from the second port 412 is supplied to the rear chamber 436 of the hydraulic cylinder 430 via the second flow path 402. In this manner, the injection unit 300 is pressed rearward. The injection unit 300 is retreated, and the nozzle 320 is separated from the stationary mold 11.

In the present embodiment, the moving unit 400 includes the hydraulic cylinder 430, but the present invention is not limited thereto. For example, instead of the hydraulic cylinder 430, an electric motor and a motion conversion mechanism that converts a rotary motion of the electric motor into a linear motion of the injection unit 300 may be used.

### <Control Unit>

The control unit 700 directly transmits a control signal to the mold clamping unit 100, the ejector unit 200, the injection unit 300, and the moving unit 400, thereby controlling the drive of the injection molding machine 1.

For example, the control unit 700 is configured to mainly include a computer, and has a central processing unit (CPU) 701, a memory device 702, an auxiliary storage device 703, and an interface device 704 for inputting and outputting. The control unit 700 performs various types of the control by causing the CPU 701 to execute a program installed in the auxiliary storage device 703. In addition, the control unit 700 receives a signal from the outside or outputs a signal to the outside through the interface device 704.

The control unit 700 repeatedly manufactures molding products by repeatedly performing the mold closing process, the mold clamping process, and the mold opening process. In addition, the control unit 700 causes the injection unit 300 to perform the plasticizing process, the filling process, and the holding pressure process during the mold clamping process.

A series of operations for obtaining the molding products, for example, an operation from the start of the plasticizing process performed by the injection unit 300 to the start of the subsequent plasticizing process performed by the injection unit 300 is referred to as a "shot" or a "molding cycle" . In addition, a time required for one shot is referred to as a "molding cycle time".

For example, one molding cycle has the plasticizing process, the mold closing process, and the mold clamping process which are performed by the injection unit 300 and the second injection unit 500, the filling process performed by the injection unit 300 and the second injection unit 500, the holding pressure process, the cooling process, the mold opening process, and the ejection process which are performed by the injection unit 300 and the second injection unit 500 in this order. The order described here is the order of the start times of the respective processes. The filling process, the holding pressure process, and the cooling process are performed until the mold clamping process is completed after the mold clamping process starts. The completion of the mold clamping process coincides with the start of the mold opening process.

A plurality of the processes may be simultaneously performed in order to shorten the molding cycle time. For example, the plasticizing process may be performed during the cooling process of the previous molding cycle. In this case, the mold closing process may be performed in an initial stage of the molding cycle. In addition, the filling process may start during the mold closing process. In addition, the ejection process may start during the mold opening process. When an on-off valve for opening and closing the flow path of the nozzle 320 of the injection unit 300 and the nozzle 520 of the second injection unit 500 (to be described later) is provided, the mold opening process may start during the plasticizing process. The reason is as follows. Even when the mold opening process starts during the plasticizing process, when the on-off valve closes the flow paths of the nozzle 320 and the nozzle 520, the molding material does not leak from the nozzle 320 and the nozzle 520.

The control unit 700 is connected to the operation unit 750 and the display unit 760.

The operation unit 750 receives an input operation relating to the injection molding machine 1 from a user, and outputs a signal corresponding to the input operation to the control unit 700.

The display unit 760 displays an operation screen relating to the injection molding machine 1 in response to the input operation in the operation unit 750 under the control of the control unit 700.

The operation screen displayed on the display unit 760 is used for the setting relating to the injection molding machine 1. For example, the setting relating to the injection molding machine 1 includes setting of the molding conditions (specifically, an input of a set value) relating to the injection molding machine 1. In addition, for example, the setting includes setting relating to selection of a type of a detection value of various sensors, which is recorded as logging data during the molding operation and relates to the injection molding machine 1. In addition, for example, the setting includes setting of specifications (for example, a type of an actual value to be displayed or a display method) in which the detection value (actual value) of various sensors which relates to the injection molding machine 1 during the molding operation is displayed on the display unit 760. A plurality of the operation screens are prepared, and may be displayed by switching of the display unit 760, or may be displayed in an overlapping manner. A user can perform the setting (including the input of the set value) relating to the injection molding machine 1 by operating the operation unit 750 while looking at the operation screen displayed on the display unit 760.

In addition, the display unit 760 displays various information (information screen) according to the operation on the operation screen under the control of the control unit 700. A plurality of information screens are prepared, and may be displayed by switching of the display unit 760, or may be displayed in an overlapping manner. For example, the display unit 760 displays setting contents relating to the injection molding machine 1 (for example, setting contents relating to the molding conditions of the injection molding machine 1) . In addition, for example, the display unit 760 displays management information (for example, information relating to an actual result of the operations of the injection molding machine 1) .

For example, the operation unit 750 and the display unit 760 may be configured to function as a touch panel type display, and may be integrated with each other.

Although the operation unit 750 and the display unit 760 of the present embodiment are integrated with each other, both of these may be independently provided. In addition, a plurality of the operation units 750 may be provided. In addition, the injection molding machine 1 may be provided with another input device instead of or in addition to the operation unit 750. For example, a voice input device that receives a voice input of the user or a gesture input device that receives a gesture input of the user may be provided.

### [Method of Collecting Data relating to Injection Molding Machine and Method of Providing Data for User]

Next, a method of collecting data relating to the injection molding machine 1 and a method of providing the data for a user will be described with reference to Figs. 2 to 7.

### <First Example of Method of Collecting Data relating to Injection Molding Machine and Method of Providing Data for User>

Fig. 2 is a view illustrating a first example of a functional configuration relating to data collection of the injection molding machine 1. In this example, a data collection controller 700B selectively collects operation data that satisfies a predetermined condition (for example, a trigger condition to be described later). Then, information relating to an operation state of the injection molding machine 1 which corresponds to the collected operation data is provided later for the user through the display unit 760 in response to a request of the user.

As illustrated in Fig. 2, the control unit 700 includes a host controller 700A, the data collection controller 700B, and a control controller 700C. In addition, the control unit 700 (data collection controller 700B and control controller 700C) is connected to a driver 770 and an input device 780 to be communicable therebetween through a bus B.

For example, the host controller 700A, the data collection controller 700B, and the control controller 700C realize various functions by causing each incorporated CPU 701 to execute a program installed in each incorporated auxiliary storage devices 703. Hereinafter, the data collection controller 700B and the control controller 700C may be collectively referred to as a "subordinate controller" in some cases.

The host controller 700A is connected to the operation unit 750 and the display unit 760 on a one-to-one basis through a predetermined communication line. In this manner, the host controller 700A can reflect a request of the user (for example, a setting input) through the operation unit 750 in a control process of the subordinate controller, or can provide various data based on the control process of the subordinate controller for the user through the display unit 760. In addition, the host controller 700A is connected to the data collection controller 700B on a one-to-one basis through a predetermined communication line. In this manner, the host controller 700A can transmit various signals (for example, setting contents relating to data collection to be described later) to the data collection controller 700B, or can acquire (receives) the data collected from the data collection controller 700B.

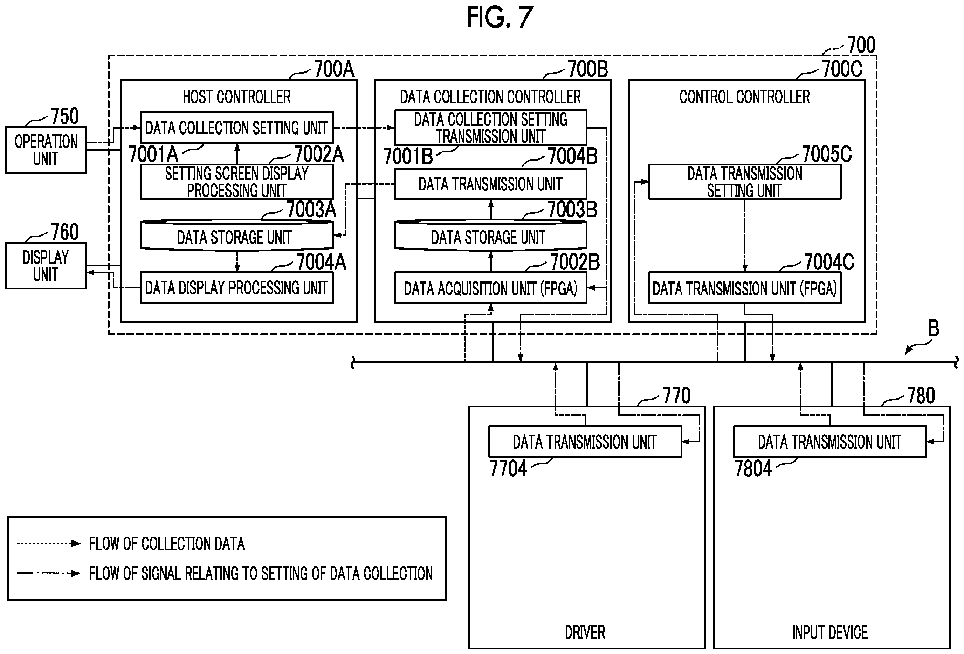

The host controller 700A may be connected to the data collection controller 700B to be communicable therebetween via the bus B. In addition, instead of or in addition to the operation unit 750 and display unit 760, a terminal device having a function the same as that of the operation unit 750 and display unit 760 (for example, a laptop computer terminal or a tablet terminal) may be connected to the host controller 700A by a one-to-one communication line. Hereinafter, the same applies to a case of a second example (Fig. 7) to be described later.

The host controller 700A includes a data collection setting unit 7001A, a setting screen display processing unit 7002A, and a data display processing unit 7004A. In addition, the host controller 700A uses a data storage unit 7003A. The data storage unit 7003A can be realized by a memory device 702 of the host controller 700A or the auxiliary storage device 703.

The data collection setting unit 7001A performs setting relating to collection of operation data of the injection molding machine 1 in response to the operation of the user which is performed on the operation unit 750. As will be described later, the operation data is collected (acquired) by the data collection controller 700B, and is recorded (stored) inside the data collection controller 700B. For example, the data collection setting unit 7001A performs setting relating to collection of the operation data of the injection molding machine 1 in response to an operation through the operation unit 750 of the user on an operation screen (hereinafter, "data collection setting screen ") displayed on the display unit 760 by the setting screen display processing unit 7002A. For example, the setting contents of the data collection setting unit 7001A are stored (registered) in the auxiliary storage device 703 inside the host controller 700A, and are transmitted to the data collection controller 700B. In this manner, the data collection controller 700B can identify the setting contents relating to collection of the operation data of the injection molding machine 1.

The operation data includes data indicating a control state relating to a molding operation of the injection molding machine 1 (hereinafter, "control data"). The control data is output by the control controller 700C (an example of a data output portion). In addition, the operation data includes data relating to an operation state of the driver 770 that drives various electric actuators that realize the molding operation of the injection molding machine 1 (hereinafter, "driver operation data"). The driver operation data is output by various drivers 770 (an example of the data output portion). In addition, the operation data includes various detection data relating to the injection molding machine 1 during the operation. The detection data is output by the input device 780 (an example of the data output portion or a detection data output device) .

For example, the setting relating to collection of the operation data of the injection molding machine 1 includes setting relating to which type of the operation data is selected as acquisition target operation data (hereinafter, "acquisition target data") from a plurality of types of the operation data that can be set and defined in advance (hereinafter, "settable operation data"). In addition, for example, the setting relating to collection of the operation data of the injection molding machine 1 includes setting relating to which acquisition target data acquired at any timing (hereinafter, "acquisition target timing") is selected as the acquisition target from the acquisition target data output in the time-series. For example, the setting of the acquisition target timing includes setting of a condition that triggers data collection for each operation data set as the acquisition target data (hereinafter, a "trigger condition") . The trigger condition may include a condition that triggers the start of data collection (hereinafter, "start trigger condition") and a condition that triggers the end of data collection (hereinafter, "end trigger condition"). Hereinafter, a period from when the trigger start condition is satisfied to when the trigger end condition is satisfied may be referred to as "when the trigger condition is satisfied". The trigger for data collection may vary depending on each operation data set as the acquisition target data, or may be the same in some or all operation data set as the acquisition target data. For example, a start trigger and an end trigger for data collection may be occurrence of an abnormality relating to the injection molding machine 1 and the end of abnormality (returning to normality). The abnormality relating to the injection molding machine 1 includes an abnormality relating to a device corresponding to the target operation data or the related device. For example, whether or not the abnormality occurs may be determined, based on abnormality signals indicating occurrence of the abnormality which are output from various devices of the injection molding machine 1 (data collection controller 700B, control controller 700C, driver 770, and input device 780).

The setting screen display processing unit 7002A displays the data collection setting screen in response to a predetermined operation performed on the operation unit 750 by the user.

As described above, the data collection setting screen is used by the user to set which type of the operation data is selected as the acquisition target data or to set the acquisition target timing among from the plurality of types of settable operation data. In addition, for example, the data collection setting screen, is used by the user to confirm (refer to) whether the setting contents of the acquisition target data (for example, which type of the operation data is set as the acquisition target data or how the acquisition target timing is designated).

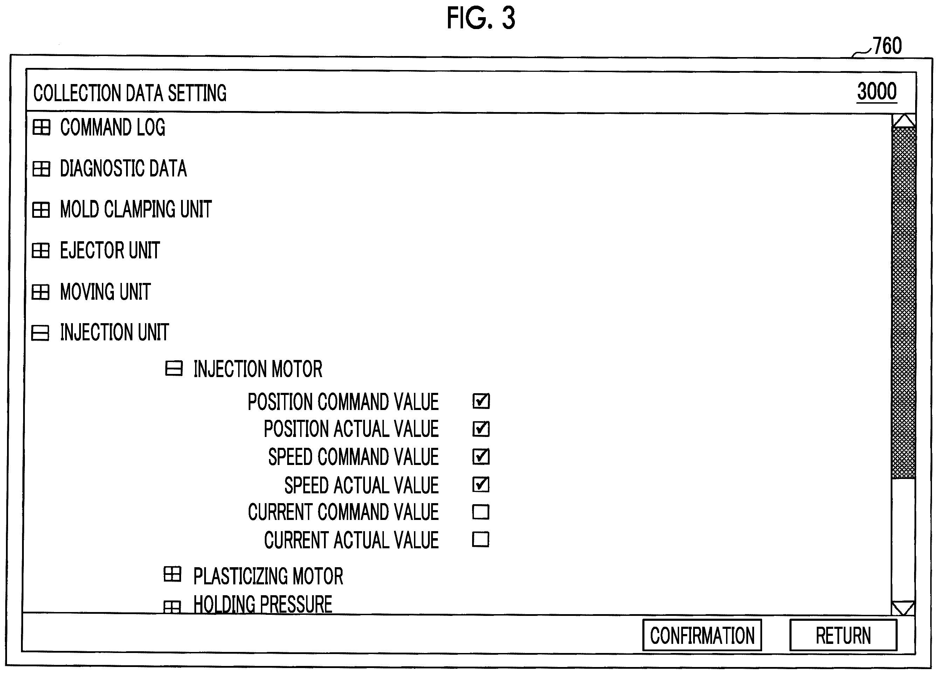

For example, Fig. 3 is a view illustrating an example of the data collection setting screen (data collection setting screen 3000) displayed on the display unit 760.

As illustrated in Fig. 3, in this example, each settable operation data is classified into a relatively large classification (hereinafter, "major classification") and a relatively small classification included in the major classification (hereinafter, "minor classification"), and is displayed hierarchically in a form linked to the major classification and the minor classification.

In this example, the major classification such as a "command log", "diagnostic data", the "mold clamping unit", the "ejector unit", the "moving unit", and the "injection unit" are defined in advance. The "command log" is the major classification corresponding to data relating to a log of command exchange between a control device (for example, the control controller 700C) and a controlled device (for example, the driver 770 or the input device 780) . The "diagnostic data" is the major classification corresponding to data relating to a result of self-diagnosis during the operation of various devices such as the control controller 700C, the driver 770, and the input device 780. The "mold clamping unit" is the major classification corresponding to operation data relating to the mold clamping unit 100. The "ejector unit" is the major classification corresponding to the operation data relating to the ejector unit 200. The "moving unit" is the major classification corresponding to the operation data relating to the moving unit 400. The "injection unit" is the major classification corresponding to the operation data relating to the injection unit 300.

In the major classification of the "injection unit", the minor classification such as the "injection motor", the "plasticizing motor", and the "holding pressure" is defined in advance. The "injection motor" is the minor classification corresponding to the operation data relating to the injection motor 350.

As illustrated in Fig. 3, as the settable operation data, the minor classification of the injection motor" includes position command value data, position actual value data, speed command value data, speed actual value data, current command value data, and current actual value data. In addition, as the settable operation data, the minor classification of the "inj ection motor" may include voltage actual value data and pulse width modulation (PWM) command value data. Each of the position command value data and the speed command value data is data indicating a command value relating to a rotation position (rotation angle) and a rotation speed of the injection motor 350, and may be output from the control controller 700C. Each of the position actual value data and the speed actual value data is data indicating an actual value (detection value) of the rotation position and the rotation speed of the injection motor 350, and may be output from the input device 780 (injection motor encoder 351) that detects the position and the speed of the injection motor 350. The current command value data is data indicating a command value relating to a current of the injection motor 350, and may be output from the control controller 700C. In addition, the current actual value data is data indicating an actual value (detection value) of the current of the injection motor 350, and may be output from the input device 780 that detects the current of the injection motor 350. In addition, the voltage actual value data is data indicating an actual value (detection value) of a voltage of the injection motor 350, and may be output from the input device 780 that detects the voltage applied to the injection motor 350. In addition, the PWM command value data is data indicating a command value for driving a switching element included in the driver 770, and may be output from the driver 770.

The "plasticizing motor" is the minor classification corresponding to the operation data relating to the plasticizing motor 340. For example, the minor classification of the "plasticizing motor" may include position command value data, position actual value data, speed command value data, speed actual value data, current command value data, current actual value data, and voltage actual value data, and the PWM command value data, which relate to the plasticizing motor 340.

The "holding pressure" is the minor classification of the pressure (holding pressure) of the molding material in the front end of the screw 330. For example, the minor classification of the "holding pressure" may include command value data relating to the holding pressure and the actual value data relating to the holding pressure.

On the data collection setting screen 3000, the user can use the operation unit 750 to operate an icon (square including a symbol of "+" or "-") adjacent to a left side of character information indicating the major classification. In this manner, the user can deploy and display a subordinate hierarchy (minor classification) of the major classification, or can fold the lower hierarchy not to be displayed. In this example, only the major classification of the "injection unit" is deployed, and the subordinate minor classification is displayed.

Similarly, on the data collection setting screen 3000, the user can use the operation unit 750 to operate the icon adjacent to the left side of the character information indicating the deployed minor classification. In this manner, the user can deploy and display the subordinate hierarchy of the minor classification (settable operation data included in the minor classification), or can fold the subordinate hierarchy not to be displayed.

On the data collection setting screen 3000, the user can use the operation unit 750 to operate a check box adjacent to a right side of the deployed settable operation data. In this manner, the user can input a check mark or can delete the check mark. In this manner, the user can input the check mark to the check box for one settable operation data or the plurality of settable operation data included in the deployed minor classification, and can set (add) the settable operation data as the acquisition target data. In addition, the user can delete the check mark of the check box for one settable operation data or the plurality of settable operation data included in the deployed minor classification, and can exclude the settable operation data from the acquisition target data. In addition, the user can confirm contents of the check boxes for one settable operation data or the plurality of settable operation data included in the deployed minor classification. In this manner, the user can identify which type of the settable operation data is set as the acquisition target data.

In this example, the check mark is input to the check box corresponding to the position command data, the position actual value data, the speed command value data, and the speed actual value data which are included in the minor classification of the "injection motor", and is set as the acquisition target data.

Referring back to Fig. 2, in addition, the data collection setting screen may be used by the user to confirm a state of a processing load relating to data collection, that is, a processing load of the data collection controller 700B, when the acquisition target data or the acquisition target timing is newly or additionally set. That is, on the data collection setting screen, information indicating the state of the processing load relating to data collection may be displayed in a case where the setting relating to the acquisition target data is performed in response to a request of the user. In this case, for example, the setting relating to the acquisition target data includes setting of the acquisition target data which is selectively performed from the plurality of types of settable operation data. In addition, for example, the setting relating to the acquisition target data includes setting of the acquisition target timing (for example, the trigger condition). The setting of the acquisition target timing may adopt an aspect in which the setting can be performed on each acquisition target data, may adopt an aspect in which the setting can be collectively performed on all of the acquisition target data, or may adopt an aspect in which the setting can be performed in both ways. For example, the data collection setting screen may display a state of the processing load relating to data collection in at least one of states before and after the case of the setting (that is, a current setting state and a new setting state) . For example, when a new type of the acquisition target data is added, the number of types of the acquisition target data acquired in a processing cycle defined in advance increases. Accordingly, the processing load in the processing cycle increases. In some cases, there is a possibility that the processing load may exceed an upper limit of the processing load allowable in the processing cycle. In addition, for example, when a new acquisition target timing is added, the processing load in the processing cycle increases depending on the number of types of the acquisition target data corresponding to the acquisition target timing. In some cases, there is a possibility that the processing load may exceed the upper limit of the processing load allowable in the processing cycle. On the other hand, for example, when there is a type of the operation data which the user wants to collect (acquire) as the acquisition target data, the user identifies the state of the processing load relating to data acquisition. In this manner, the user can identify a possibility that the data may be additionally acquired. Similarly, for example, when the user wants to add the acquisition target timing for collecting (acquiring) the acquisition target data, the user identifies the state of the processing load relating to data acquisition. In this manner, the user can identify a possibility that the acquisition target data may be additionally acquired at the acquisition target timing. Therefore, the user can more easily set the acquisition target data.

For example, the information indicating the state of the processing load relating to data collection may include information indicating the time-series processing load of (the CPU701 of) the data collection controller 700B. The reason is as follows. When the processing load of the CPU 701 of the data collection controller 700B relatively increases, there is a possibility that a new type of the operation data or the operation data corresponding to the new acquisition target timing may not be additionally acquired within a processing cycle defined in advance. In this case, the processing load of the CPU 701 of the data collection controller 700B may include the processing load of another processor (for example, graphics processing unit (GPU)) operated under the control of the CPU 701.

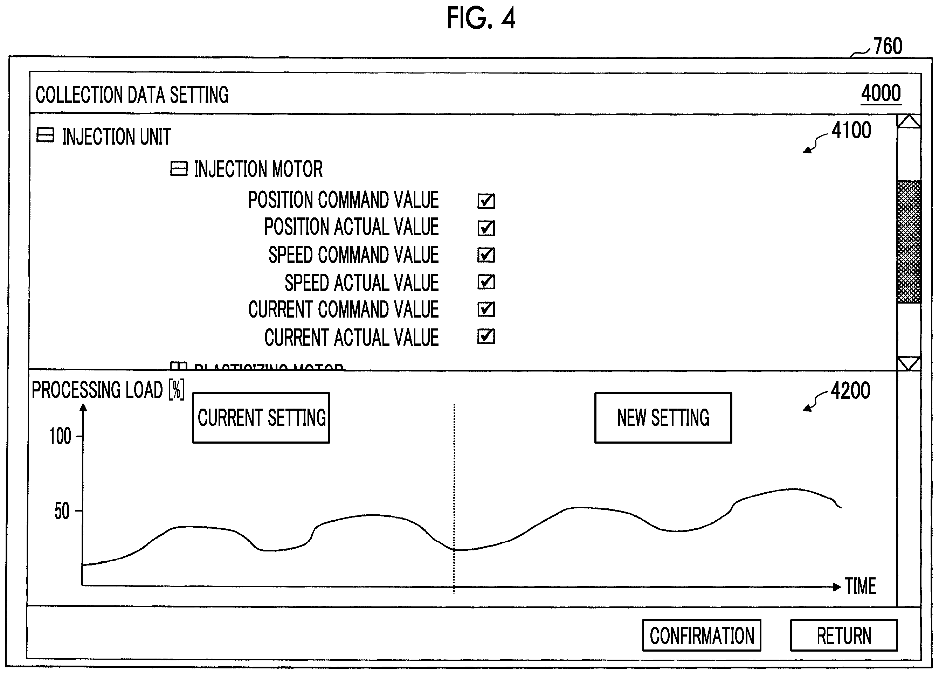

For example, Fig. 4 is a view illustrating another example (data collection setting screen 4000) of the data collection setting screen displayed on the display unit 760.

As illustrated in Fig. 4, the data collection setting screen 4000 includes a setting display region 4100 and a processing load display region 4200. The content of the setting display region 4100 is the same as that of the data collection setting screen 3000. Accordingly, the processing load display region 4200 will be mainly described.

The processing load display region 4200 displays a graph indicating the time-series processing load of the data collection controller 700B.

In this example, with respect to a setting state (hereinafter, "current setting") of the data collection setting screen 3000 in Fig. 3, the current command value data and the current actual value data which are included in the minor classification of the "injection motor" are added as candidate data by the operation of the user through the operation unit 750. Therefore, in this example, the processing load display region 4200 displays a graph indicating a time change in the processing load during the processing cycle of the data collection controller 700B in each of the current setting and new setting to which the candidate data is added (hereinafter, "new setting") . For example, based on actual measurement result data or simulation result data relating to the processing load of the data collection controller 700B, the host controller 700A can predict the processing load during the processing cycle of the data collection controller 700B by performing the new settings. In this manner, the user can confirm how much the processing load of the data collection controller 700B increases due to addition of the candidate data. The user can determine whether or not to actually perform the new setting, or can adjust the number of types of the candidate data to be added.

As described above, the processing load display region 4200 may display only the information (graph) indicating the time change in the processing load after the new setting, that is, in a state of the new setting. In addition, as described above, the processing load display region 4200 may display only the information (graph) indicating the time change in the processing load before the new setting, that is, in a state of the current setting. The user confirms the processing load of the data collection controller 700B in the state of the current setting. In this manner, the user can guess whether or not there is enough room for adding and acquiring the candidate data in the processing load of the data collection controller 700B.

Referring back to Fig. 2, in addition, for example, the information indicating the state of the processing load relating to data collection may include information indicating a maximum processing load of (the CPU701 of) the data collection controller 700B during the operation of the injection molding machine 1. In this manner, the user can confirm the information relating to the processing load of the CPU 701 of the data collection controller 700B, and can determine for himself or herself whether or not the data collection controller 700B can collect a desired type of the operation data. Therefore, the user can perform an operation for setting the desired type of the operation data as the acquisition target data, through the operation unit 750, while confirming the information relating to the processing load of the CPU 701 of the data collection controller 700B. Therefore, the user can more easily set the acquisition target data.

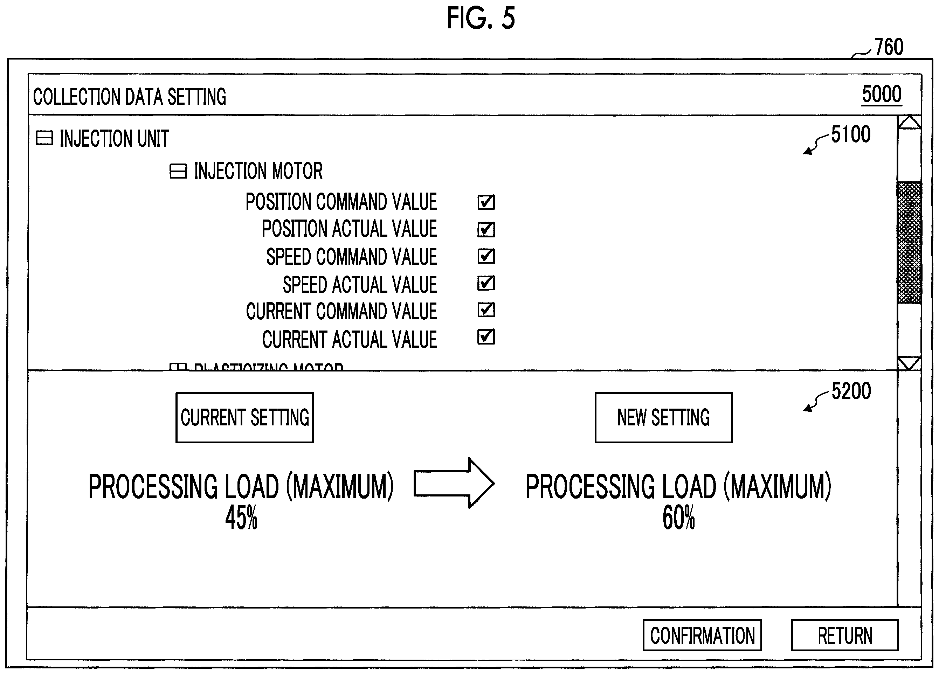

For example, Fig. 5 is a view illustrating still another example (data collection setting screen 5000) of the data collection setting screen displayed on the display unit 760.

As illustrated in Fig. 5, the data collection setting screen 5000 includes a setting display region 5100 and a processing load display region 5200. The content of the setting display region 5100 is the same as that of the data collection setting screen 3000. Accordingly, the processing load display region 5200 will be mainly described.

The processing load display region 5200 displays a graph indicating the maximum processing load during a control cycle of the data collection controller 700B.

In this example, with respect to the setting state (current setting) of the data collection setting screen 3000 in Fig. 3, the current command value data and the current actual value data which are included in the minor classification of the " injection motor" are added as the candidate data by the operation of the user through the operation unit 750. Therefore, in this example, the processing load display region 5200 displays a maximum value (specifically, percentage notation for the allowable processing load) of the processing load during the processing cycle of the data collection controller 700B in each of the current setting and the new setting to which the candidate data is added (new setting). For example, the host controller 700A predicts the maximum value of the processing load during the processing cycle of the data collection controller 700B in the new setting, based on the actual measurement result data or the simulation result data relating to the processing load of the data collection controller 700B. In this manner, the user can confirm how much the processing load of the data collection controller 700B increases due to addition of the candidate data. The user can determine whether or not to actually perform the new setting, or can adjust the number of types of the candidate data to be added.

Referring back to Fig. 2, in addition, when the acquisition target data is newly or additionally set, the data collection setting screen may be used by the user to confirm whether or not the candidate operation data (hereinafter, the "candidate data") can be acquired by the data collection controller 700B. That is, in a case where the acquisition target data is set in response to a request of the user, the data collection setting screen may display information relating to whether or not the candidate data designated by the request of the user can be acquired by the data collection controller 700B (hereinafter, "acquisition availability information"). In this manner, the user can identify whether or not the acquisition requested candidate data can be acquired, through the operation unit 750. Therefore, the user can more easily set the acquisition target data.

Similarly, when the acquisition target timing is newly or additionally set, the data collection setting screen may be used by the user to confirm whether or not the acquisition target data can be acquired at a candidate timing (hereinafter, a "candidate timing") by the data collection controller 700B. That is, in a case where the acquisition target timing is set in response to the request of the user, the data collection setting screen may display the acquisition availability information relating to whether the data collection controller 700B can acquire the acquisition target data at the candidate timing designated by the request of the user. In this manner, the user can identify whether or not the acquisition target data can be acquired at the acquisition requested candidate timing, through the operation unit 750. Therefore, the user can more easily set the acquisition target timing.

For example, the acquisition availability information of the candidate data may include information for specifying whether or not the candidate data can be acquired by the data collection controller 700B. For example, whether or not the candidate data can be acquired by the data collection controller 700B may be determined (specified), based on the current processing load of the CPU 701 of the data collection controller 700B. In addition, for example, whether or not the candidate data can be acquired by the data collection controller 700B may be determined, based on the actual measurement result data relating to the processing load of the data collection controller 700Bor the data relating to the simulation result. For example, when a specific type of the operation data is designated as the candidate data by an input of the user to the operation unit 750, the host controller 700A may determine whether or not the candidate data can be acquired, and may display a determination result thereof on the display unit 760. In this manner, the user can more easily identify whether or not the candidate data designated by the user himself or herself can be set as the acquisition target data. In this case, the data collection setting unit 7001A may automatically set the candidate data as the target data, when the data collection controller 700B determines that the candidate data can be additionally acquired. That is, in view of the processing load of the CPU 701 of the data collection controller 700B, as the target data, the data collection setting unit 7001A may automatically set the candidate data designated by the request of the user (that is, an operation on the data collection setting screen) from the plurality of types of the target data. In this manner, user convenience is improved.

Similarly, for example, the acquisition availability information of the acquisition target data at the candidate timing may include information for specifying whether the acquisition target data can be acquired at the candidate timing by the data collection controller 700B. For example, whether or not the acquisition target data can be acquired at the candidate timing by the data collection controller 700B may be determined (specified), based on the current processing load of the CPU 701 of the data collection controller 700B. In addition, for example, whether or not the acquisition target data can be acquired at the candidate timing by the data collection controller 700B may be determined, based on the actual measurement result data relating to the processing load of the data collection controller 700B or the data relating to the simulation result. For example, when the candidate timing is newly designated by the input of the user to the operation unit 750, the host controller 700A may determine whether or not the acquisition target data can be acquired at the candidate timing, and may display a determination result thereof on the display unit 760. In this manner, the user can more easily identify whether or not the candidate timing designated by the user himself or herself can be set as the acquisition target timing. In this case, when it is determined that the data collection controller 700B can additionally acquire the acquisition target data at the candidate timing, the data collection setting unit 7001A may automatically set the candidate timing as the acquisition target timing. That is, in view of the processing load of the CPU 701 of the data collection controller 700B, the data collection setting unit 7001A may automatically set the candidate timing designated by the request of the user (that is, the operation on the data collection setting screen) as the acquisition target timing. In this manner, user convenience is improved.

In addition, for example, the acquisition availability information of the candidate data may include information relating to materials for the user to determine whether or not the candidate data can be acquired by the data collection controller 700B (hereinafter, "determination material information"). Similarly, for example, the acquisition availability information of the acquisition target data at the candidate timing may include information (determination material information) relating to a material for the user to determine whether the acquisition target data can be acquired at the candidate timing by the data collection controller 700B.

For example, the determination material information may include information indicating a change in the processing load of the data collection controller 700B with respect to addition of the candidate data and the candidate timing. Specifically, the determination material information may be information (for example, a portion corresponding to the new setting of the processing load display region 4200 in Fig. 4 or the processing load display region 5200 in Fig. 5) indicating the processing load of the data collection controller 700B after the acquisition target data or the acquisition target timing is newly set (that is, the new setting). In addition, the determination material information may be information (for example, the processing load display region 4200 in Fig. 4 or the processing load display region 5200 in Fig. 5) indicating the processing load of the data collection controller 700B before and after the acquisition target data or the acquisition target timing is newly set (that is, the current setting and the new setting) . In this manner, when the acquisition target data or the acquisition target timing is newly set, the user can confirm a change in the processing load of the data collection controller 700B, and can determine by himself or herself whether or not the new candidate data or the acquisition target data at the candidate timing can be acquired.

Functions of the data collection setting unit 7001A and the setting screen display processing unit 7002A of the host controller 700A may be applied to the injection molding machine 1 in which the control controller 700C is used for both the control function and the data collection function which relate to the molding operation. That is, the functions of the data collection setting unit 7001A and the setting screen display processing unit 7002A of the host controller 700A may be applied to the injection molding machine 1 when the data collection controller 700B is omitted.

The data storage unit 7003A stores the acquisition target data (hereinafter, "collection data") received from the data collection controller 700B and collected by the data collection controller 700B.

The data display processing unit 7004A causes the display unit 760 to display the collection data collected (acquired) by the data collection controller 700B, in response to a predetermined operation of the user on the operation unit 750. Specifically, the data display processing unit 7004A may transmit a transmission request for the collection data to the data collection controller 700B, in response to a user's predetermined operation on the operation unit 750. Then, the data display processing unit 7004A may cause the display unit 760 to display the collection data transmitted from the data collection controller 700B and stored in the data storage unit 7003A, in response to the transmission request. For example, the data display processing unit 7004A displays the collection data for each type in a time-series manner.

As described above, the data collection controller 700B (an industrial machine controller, an example of a first controller) is connected to the host controller 700A on a one-to-one basis through a predetermined communication line. In addition, the data collection controller 700B is connected to the control controller 700C, the driver 770, and the input device 780 through the bus B. In this manner, the data collection controller 700B can transmit various signals to the control controller 700C, the driver 770, and the input device 780 through the bus B. In addition, the data collection controller 700B can acquire the acquisition target data from the control controller 700C, the driver 770, and the input device 780 through the bus B.

An aspect may be adopted as follows. The host controller 700A may be omitted, and the operation unit 750 and the display unit 760, or the terminal device having the same function may be directly connected to the data collection controller 700B. In this case, the functions of the data collection setting unit 7001A and the setting screen display processing unit 7002A may be transferred to the data collection controller 700B or the terminal device connected to the data collection controller 700B. Hereinafter, the same applies to a case of a second example (Fig. 7) to be described later.

The data collection controller 700B includes a data collection setting transmission unit 7001B, a data acquisition unit 7002B, and a data transmission unit 7004B. In addition, the data collection controller 700B uses a data storage unit 7003B. For example, the data storage unit 7003B can be realized by a memory device 702 inside the data collection controller 700B or an auxiliary storage device 703.

The data collection setting transmission unit 7001B transmits setting contents relating to collection of the operation data received from the host controller 700A to an output portion that outputs the operation data (hereinafter, an "operation data output portion. The operation data output portion includes at least one of the control controller 700C, the driver 770, and the input device 780 which output the settable operation data. The data collection setting transmission unit 7001B may transmit the setting contents only to the operation data output portion that outputs (a type of) the operation data set as the acquisition target data in the setting contents, out of all data output portions which output the settable operation data.

The data acquisition unit 7002B acquires the operation data (acquisition target data) transmitted from the operation data output portion (the control controller 700C, the driver 770, or the input device 780), and records (stores) the operation data in the data storage unit 7003A. Specifically, as the acquisition target data, the data acquisition unit 7002B causes the data storage unit 7003A to store time-series data (hereinafter, "combined operation data") in which time-series operation data acquired (received) from each of the plurality of operation data output portions are combined with each other in a time-aligned manner. For example, the combined operation data is time-series data in which values of the plurality of types of operation data corresponding to the plurality of operation data output portions are associated with each time. In this case, an output cycle varies depending on each of the plurality of types of operation data. Therefore, the combined operation data may be generated in a form in which the time-series data (group) of the plurality of types of operation data is applied to an output time of the operation data output in a minimum cycle (hereinafter, "minimum cycle operation data") out of the plurality of types of operation data corresponding the plurality of types of operation data output portions. In addition, with respect to a time at which a specific type of operation data other than the minimum cycle operation data in the combined operation data is not output, the specific type of operation data may be a value indicating that the data is not output, or may be a value complemented from the value before and after the specific type of operation data.

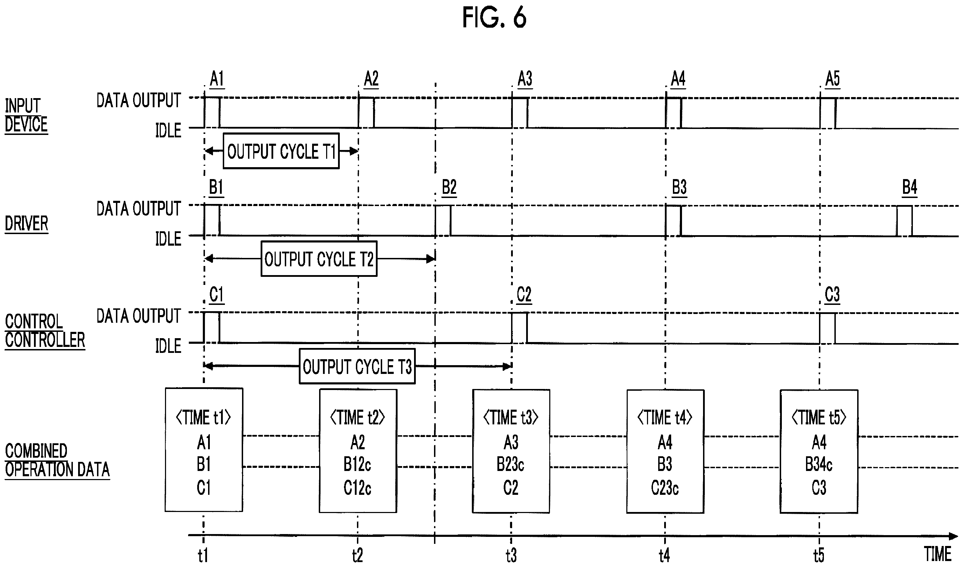

For example, Fig. 6 is a view illustrating an example of the combined operation data. Specifically, Fig. 6 is a time chart illustrating the combined operation data generated based on the acquisition target data output from each of the input device 780, the driver 770, and the control controller 700C in different output cycles T1 to T3.

As described above, the combined operation data is generated later. However, in the drawing, the combined operation data is written in parallel on the time chart so that output timings of the acquisition target data of the input device 780, the driver 770, and the control controller 700C can be compared with each other.

In this example, operation data A (A1, A2, ...) output from the input device 780, operation data B (B1, B2, ...) output from the driver 770, and operation data C (C1, C2, ...) output from the control controller 700C are the acquisition target data.

As illustrated in Fig. 6, the input device 780 outputs the operation data A in each minimum (shortest) output cycle T1. That is, the operation data A corresponds to the minimum cycle operation data. The driver 770 outputs operation the operation data B in each output cycle T2 which is 1.5 times the output cycle T1. The control controller 700C outputs the operation data C in each output cycle T3 which is twice the output cycle T1. Therefore, in this example, the combined operation data is generated in a form where the operation data output from each of the input device 780, the driver 770, and the control controller 700C is associated with times (t1, t2, ...) at which the operation data A is output from the input device 780.

For example, at time t1, all of the input device 780, the driver 770, and the control controller 700C output the acquisition target data (operation data A to operation data C) . Therefore, the combined operation data at time t1 includes the operation data A1, the operation data B1, and the operation data C1.

In addition, at time t2, the operation data A is output only from the input device 780, and the operation data B and the operation data C are not output from the driver 770 and the control controller 700C. Therefore, the combined operation data at time t2 includes the operation data A2, complementary operation data B12c, and complementary operation data C12c. The complementary operation data B12c indicates the operation data B at time t2, and is complemented, based on the operation data B1 and B2 output before and after time t2, for example. The complementary data C12c indicates the operation data C at time t2, and is complemented, based on the operation data C1 and C2 output before and after time t2, for example. In this case, when the time-series information (for example, a graph) of the operation data B or the operation data C is displayed on the display unit 760, based on the combined operation data, the user may be notified that the operation data B or the operation data C at time t2 is the complemented data. Hereinafter, the same may apply to complementary operation data B23c, complementary operation data C23c, and complementary operation data B34c.

In addition, at time t3, the operation data A and the operation data C are output from the input device 780 and the control controller 700C, and the operation data B is not output from the driver 770. Therefore, the combined operation data at time t3 includes operation data A3 and operation data C2, and the complementary operation data B23c. The complementary operation data B23c indicates the operation data B at time t3, and is complemented, based on the operation data B2 and B3 output before and after time t3, for example.

In addition, at time t4, the operation data A and the operation data B are output from the input device 780 and the driver 770, and the operation data C is not output from the control controller 700C. Therefore, the combined operation data at time t4 includes operation data A4 and operation data B3, and the complementary operation data C23c. The complementary operation data C23c indicates the operation data C at time t4, and is complemented, based on the operation data C2 and C3 output before and after time t4, for example.

In addition, at time t5, the operation data A and the operation data C are output from the input device 780 and the control controller 700C, and the operation data B is not output from the driver 770. Therefore, the combined operation data at time t5 includes operation data A5 and operation data C3, and the complementary operation data B34c. The complementary operation data B34c indicates the operation data B at time t5, and is complemented, based on the operation data B3 and B4 output before and after time t5, for example.

Referring back to Fig. 2, as described above, the data storage unit 7003B (an example of the storage unit) stores the combined operation data.

In response to the transmission request received from the host controller 700A, the data transmission unit 7004B transmits the combined operation data to the host controller 700A.

The control controller 700C performs control relating to the molding operation of the injection molding machine 1 which includes the operations of the mold clamping unit 100, the ejector unit 200, the injection unit 300, and the moving unit 400. The control controller 700C includes a trigger determination unit 7001C, a data acquisition unit 7002C, and a data transmission unit 7004C. In addition, the control controller 700C uses a data storage unit 7003C. The data storage unit 7003C can be realized by a memory device 702 or an auxiliary storage device 703 inside the control controller 700C.

The trigger determination unit 7001C determines whether or not the trigger condition is satisfied, based on the trigger condition defined in the setting contents relating to collection of the operation data received from the data collection controller 700B. Specifically, the trigger determination unit 7001C determines whether or not the trigger condition is satisfied for each of all operation data set as the acquisition target data. The reason is as follows. Data for determining a specific trigger condition (for example, an abnormality signal) may be internal data of the control controller 700C in some cases. In addition, out of the trigger conditions corresponding to all operation data set as the acquisition target data, the trigger determination unit 7001C may determine only whether or not the trigger condition corresponding to the control data of the control controller 700C and the trigger condition determined to be satisfied or not based on the internal data of the control controller 700C are satisfied.

When the trigger determination unit 7001C determines that the trigger condition is satisfied based on the internal data of the control controller 700C, the trigger determination unit 7001C transmits a signal indicating that the trigger condition is satisfied (hereinafter, a "trigger signal") to the data collection controller 700B through the bus B. In this case, the trigger signal includes identification information of the corresponding operation data (for example, an identifier (ID) uniquely defined for each operation data). Then, the data collection controller 700B transmits (notifies) the trigger signal received (notified) from the control controller 700C to another operation data output portion. In addition, the trigger determination unit 7001C may directly transmit the trigger signal to another operation data output portion. That is, when the trigger determination unit 7001C determines that the trigger condition is satisfied based on the internal data of the control controller 700C, the trigger determination unit 7001C transmits the trigger signal to another operation data output portion directly or by way of the data collection controller 700B. In this manner, even when the trigger condition is determined to be satisfied or not based on the internal data of the control controller 700C, another operation data output portion can determine whether or not the trigger condition is satisfied, depending on whether or not the trigger signal is received. In addition, when the trigger determination unit 7001C receives the trigger signal corresponding to the control data set as the acquisition target data from another operation data output portion through the bus B, the trigger determination unit 7001C determines that the trigger condition corresponding to the control data is satisfied. In this manner, even when the trigger condition corresponding to the control data is determined based on the internal data of another operation data output portion, the trigger determination unit 7001C can determine whether or not the trigger condition corresponding to the control data is satisfied, depending on whether or not the trigger signal is received from another operation data output portion.

When the trigger determination unit 7001C determines that the start trigger condition corresponding to the control data set as the acquisition target data is satisfied, the data acquisition unit 7002C sequentially acquires the control data corresponding to the trigger condition until the corresponding end trigger condition is satisfied, and records (stores) the control data in the data storage unit 7003C.

The data storage unit 7003C stores the time-series control data from when the start trigger condition is satisfied until the end trigger condition is satisfied (when the trigger condition is satisfied).

The data transmission unit 7004C transmits the time-series control data when the trigger condition stored (recorded) in the data storage unit 7003C is satisfied, to the data collection controller 700B through the bus B at a predetermined timing. In this manner, the data collection controller 700B can selectively output the collection target data (in this example, the acquisition target data when the trigger condition is satisfied) to the control controller 700C. Therefore, the data collection controller 700B does not need to perform the process of selecting the collection target data, and the processing load relating to data collection of the data collection controller 700B can be reduced. For example, a timing at which the time-series control data is transmitted from the data transmission unit 7004C to the data collection controller 700B (hereinafter, a "data transmission timing") may be fixed. In addition, for example, the data transmission timing may be variable depending on a communication load of the bus B or the processing load of the CPU 701 of the control controller 700C. In this case, the data transmission unit 7004C may determine a timing at which the communication load of the bus B is relatively low or a timing at which the processing load of the control controller 700C is relatively low, and may transmit the time-series control data when the trigger condition is satisfied, to the data collection controller 700B. In addition, the data transmission timing may be defined by the setting contents relating to collection of the control data received from the data collection controller 700B. That is, the data transmission timing may be set by the data collection setting unit 7001A in response to the operation of the user on the operation unit 750. Hereinafter, the same applies to a timing at which the time-series operation data (driver operation data and detection data) is transmitted from each of the driver 770 and the input device 780 to the data collection controller 700B.

The driver 770 drives various electric actuators of the injection molding machine 1 under the control of the control controller 700C. For example, the driver 770 includes a driver for driving and controlling the mold clamping motor 160, a driver for driving and controlling the plasticizing motor 340, and a driver for driving and controlling the injection motor 350.

The driver 770 includes a trigger determination unit 7701, a data acquisition unit 7702, and a data transmission unit 7704. The functions may be realized by any desired hardware, or a combination of any desired hardware and software. In addition, the driver 770 uses a data storage unit 7703. For example, the data storage unit 7703 is realized by a storage device incorporated in the driver 770 or an external storage device capable of communicating with the driver 770.

The trigger determination unit 7701 determines whether or not the trigger condition is satisfied, based on the trigger condition defined in the setting contents relating to collection of the operation data received from the data collection controller 700B. Specifically, the trigger determination unit 7701 determines whether or not the trigger condition is satisfied for each of all operation data set as the acquisition target data. The reason is as follows. Data for determining a specific trigger condition may be the internal data of the driver 770 in some cases. In addition, out of the trigger conditions corresponding to all operation data set as the acquisition target data, the trigger determination unit 7701 may determine only whether or not the trigger condition corresponding to the driver operation data of the driver 770 and the trigger condition determined to be satisfied or not based on the internal data of the driver 770 are satisfied.

When the trigger determination unit 7701 determines that the trigger condition is satisfied, based on the internal data of the driver 770, the trigger determination unit 7701 transmits a signal (trigger signal) indicating that the trigger condition is satisfied, to another operation data output portion via the bus B. In this case, as described above, the trigger signal includes the identification information of the corresponding operation data. Then, the data collection controller 700B transmits (notifies) the trigger signal received (notified) from the driver 770 to another operation data output portion. In addition, the trigger determination unit 7701 may directly transmit the trigger signal to another operation data output portion. That is, when the trigger determination unit 7701 determines that the trigger condition is satisfied, based on the internal data of the driver 770, the trigger determination unit 7701 transmits the trigger signal to another operation data output portion directly or by way of the data collection controller 700B. In this manner, even when the trigger condition is determined to be satisfied or not based on the internal data of the driver 770, another operation data output portion can determine whether or not the trigger condition is satisfied, depending on whether or not the trigger signal is received. In addition, when the trigger determination unit 7701 receives the trigger signal corresponding to the driver operation data set as the acquisition target data from another operation data output portion through the bus B, the trigger determination unit 7701 determines that the trigger condition corresponding to the driver operation data is satisfied. In this manner, even when the trigger condition corresponding to the driver operation data is determined based on the internal data of other operation data output portion, the trigger determination unit 7701 can determine whether or not the trigger condition corresponding to the driver operation data is satisfied, depending on whether or not the trigger signal is received from another operation data output portion.

When the trigger determination unit 7701 determines that the start trigger condition corresponding to the driver operation data set as the acquisition target data is satisfied, the data acquisition unit 7702 sequentially acquires the driver operation data corresponding to the start trigger condition until the corresponding end trigger condition is satisfied, and records (stores) the driver operation data in the data storage unit 7703.

The data storage unit 7703 stores the time-series driver operation data when the trigger condition is satisfied.

The data transmission unit 7704 transmits the time-series driver operation data when the trigger condition stored (recorded) in the data storage unit 7703 is satisfied, to the data collection controller 700B through the bus B at a predetermined timing (data transmission timing). In this manner, the data collection controller 700B can selectively output the collection target data (in this example, the acquisition target data when the trigger condition is satisfied) to the driver 770. Therefore, the data collection controller 700B does not need to perform the process of selecting the collection target data, and the processing load relating to data collection of the data collection controller 700B can be reduced.

The input device 780 inputs detection data relating to various states of the injection molding machine 1 to the control unit 700 (control controller 700C) under the control of the control controller 700C. For example, the input device 780 may include various sensors that output digital signals, such as the mold clamping motor encoder 161, the mold space adjustment motor encoder 184, the ejector motor encoder 211, the plasticizing motor encoder 341, and the injection motor encoder 351. In addition, the input device 780 may include an analog-digital converter (AD converter) that converts output signals of various sensors that output analog signals such as a current sensor and a voltage sensor into digital signals.

The input device 780 includes a trigger determination unit 7801, a data acquisition unit 7802, and a data transmission unit 7804. The functions may be realized by any desired hardware, or a combination of any desired hardware and software. In addition, the input device 780 uses a data storage unit 7803. For example, the data storage unit 7803 is realized by a storage device incorporated in the input device 780 or an external storage device capable of communicating with the input device 780.

The trigger determination unit 7801 determines whether or not the trigger condition is satisfied, based on the trigger condition defined in the setting contents relating to collection of the operation data (that is, the detection data) received from the data collection controller 700B. Specifically, the trigger determination unit 7801 determines whether or not the trigger condition is satisfied for each of all operation data set as the acquisition target data. The reason is as follows. Data for determining a specific trigger condition may be the internal data of the input device 780 in some cases . In addition, out of the trigger conditions corresponding to all operation data set as the acquisition target data, the trigger determination unit 7801 may determine only whether or not the trigger condition corresponding to the detection data of the input device 780 and the trigger condition determined to be satisfied or not based on the internal data of the input device 780 are satisfied.

When the trigger determination unit 7801 determines that the trigger condition is satisfied, based on the internal data of the input device 780, the trigger determination unit 7801 transmits the signal (trigger signal) indicating that the trigger condition is satisfied, to another operation data output portion through the bus B. In this case, as described above, the trigger signal includes the identification information of the corresponding operation data. Then, the data collection controller 700B transmits (notifies) the trigger signal received (notified) from the input device 780 to another operation data output portion. In addition, the trigger determination unit 7801 may directly transmit the trigger signal to another operation data output portion. That is, when the trigger determination unit 7801 determines that the trigger condition is satisfied, based on the internal data of the input device 780, the trigger determination unit 7801 transmits the trigger signal to another operation data output portion directly or by way of the data collection controller 700B. In this manner, even when the trigger condition is determined to be satisfied or not based on the internal data of the input device 780, another operation data output portion can determine whether or not the trigger condition is satisfied, depending on whether or not the trigger signal is received. In addition, when the trigger determination unit 7801 receives the trigger signal corresponding to the detection data set as the acquisition target data from another operation data output portion through the bus B, the trigger determination unit 7801 determines that the trigger condition corresponding to the detection data is satisfied. In this manner, even when the trigger condition corresponding to the detection data is determined based on the internal data of another operation data output portion, the trigger determination unit 7801 can determine whether or not the trigger condition corresponding to the detection data is satisfied, depending on whether or not the trigger signal is received from another operation data output portion.

When the trigger determination unit 7801 determines that the start trigger condition corresponding to the detection data set as the acquisition target data is satisfied, the data acquisition unit 7802 sequentially acquires the detection data corresponding to the trigger condition until the corresponding end trigger condition is satisfied, and records (stores) the detection data in the data storage unit 7003C.

The data storage unit 7803 stores the time-series detection data when the trigger condition is satisfied.

The data transmission unit 7804 transmits the time-series detection data stored (recorded) in the data storage unit 7803 when the trigger condition is satisfied, to the data collection controller 700B through the bus B at a predetermined timing (data transmission timing). In this manner, the data collection controller 700B can selectively output the collection target data (in this example, the acquisition target data when the trigger condition is satisfied) to the input device 780. Therefore, the data collection controller 700B does not need to perform the process of selecting the collection target data, and the processing load relating to data collection of the data collection controller 700B can be reduced.

In this way, in this example, the data collection controller 700B is provided separately from the control controller 700C that controls the molding operation of the injection molding machine 1.

For example, when the control controller 700C also performs a process relating to data collection, the control controller 700C needs to perform the process relating to data collection during a time other than a time for the control process relating to the molding operation of the injection molding machine 1. Therefore, a time available for performing the process relating to data collection is relatively shortened. As a result, there is a possibility that the number of types of operation data that can be acquired may be limited. Therefore, even when there is a type of the operation data which the user wants to collect (acquire) as the acquisition target data, there is a possibility that the user may not be able to set the operation data as the acquisition target data.

In contrast, in this example, the data collection controller 700B can concentrate on the process relating to the data collection. Therefore, the data collection controller 700B can acquire a relatively large number of types of operation data. Therefore, when there is a type of the operation data which the user wants to collect (acquire) as the acquisition target data, the user can more easily set the acquisition target data.

Instead of providing the data collection controller 700B, another CPU 701 or another processor which can perform the process relating to the data collection independently from and in parallel with the CPU 701 which performs the control process relating to the molding operation of the injection molding machine 1 may be installed in the control controller 700C. In this case, the host controller 700A may be connected to the control controller 700C by a one-to-one communication line.

In addition, in this example, each of the operation data output portions (the control controller 700C, the driver 770, and the input device 780) from which the operation data is output determines whether or not the trigger condition relating to collection (acquisition) of the operation data is satisfied. Then, the time-series operation data when the trigger condition is satisfied is collected (stored) in the operation data output portion, and the collected (accumulated) operation data is collectively transmitted to the data collection controller 700B at a predetermined data transmission timing.

For example, when the data collection controller 700B acquires (receives) the operation data periodically output from the operation data output portion to the bus B to determine whether or not all of the trigger conditions are satisfied, there is a possibility that the processing load may relatively increase. Therefore, there is a possibility that the number of types of operation data that can be acquired may be limited. Therefore, even when there is a type of the operation data which the user wants to collect (acquire) as the acquisition target data, there is a possibility that the user may not be able to set the acquisition target data.

In contrast, in this example, the process relating to collection of the operation data is distributed not only to the data collection controller 700B but also to the whole system including the operation data output portion. Therefore, the processing load of the data collection controller 700B can be relatively reduced, and the data collection controller 700B can acquire more types of the operation data. Therefore, when there is a type of the operation data which the user wants to collect (acquire) as the acquisition target data, the user can more easily set the acquisition target data.

The same method may be applied to the injection molding machine 1 in which the control controller 700C is also used for the control function and the data collection function which relate to the molding operation, that is, the injection molding machine 1 when the data collection controller 700B is omitted.

In addition, in this example, when it is determined that the trigger condition is satisfied based on the internal data, the operation data output portions (the control controller 700C, the driver 770, and the input device 780) transmit the trigger signal indicating that the trigger condition is satisfied, to another operation data output portion directly or by way of the data collection controller 700B.

For example, when it is determined that the trigger condition is satisfied, only based on the internal data, the trigger conditions that can be determined are limited. That is, there is a possibility that a degree of freedom relating to the trigger for data collection may be limited.

In contrast, in this example, the operation data output portion can determine whether or not the trigger condition determined based on the internal data of another operation data output portion including the control controller 700C is satisfied, depending on whether or not the trigger signal is received. Therefore, the degree of freedom in data collection can be relatively improved.

The same method may be applied to the injection molding machine 1 in which the control controller 700C is also used for the control function and the data collection function which relate to the molding operation, that is, the injection molding machine 1 when the data collection controller 700B is omitted.

### <Second Example of Method of Collecting Data relating to Injection Molding Machine and Method of Providing Data for User>

Fig. 7 is a view illustrating a second example of a functional configuration relating to data collection of the injection molding machine 1. In this example, the data collection controller 700B selectively collects (acquires) the acquisition target data (acquisition target data) from data (settable operation data) relating to operation states of a plurality of types of injection molding machines 1. Then, the collected operation data is provided for the user through the display unit 760 on a real-time basis in response to a request of the user. Hereinafter, portions different from those of the above-described first example (Fig. 2) will be mainly described, and description of the same portions or the corresponding portions may be simplified or omitted in some cases.

As illustrated in Fig. 7, as in the case of the first example (Fig. 2) described above, the control unit 700 includes the host controller 700A, the data collection controller 700B, and the control controller 700C. In addition, as in the case of the first example described above, the control unit 700 (the data collection controller 700B and the control controller 700C) is connected to the driver 770 and the input device 780 to be communicable therebetween through the bus B.

As in the case of the first example described above, the host controller 700A is connected to the operation unit 750 and the display unit 760 on a one-to-one basis through a predetermined communication line. In addition, the host controller 700A is connected to the data collection controller 700B on a one-to-one basis through a predetermined communication line.

As in the case of the first example described above, the host controller 700A includes the data collection setting unit 7001A, the setting screen display processing unit 7002A, and the data display processing unit 7004A. In addition, the host controller 700A uses a data storage unit 7003A. The data storage unit 7003A can be realized by a memory device 702 of the host controller 700A or the auxiliary storage device 703.

The data collection controller 700B is connected on a one-to-one basis through a predetermined communication line. In addition, the data collection controller 700B is connected to the control controller 700C, the driver 770, and the input device 780 through the bus B.

The data collection controller 700B includes a data collection setting transmission unit 7001B, a data acquisition unit 7002B, and a data transmission unit 7004B. In addition, the data collection controller 700B uses a data storage unit 7003B. For example, the data storage unit 7003B can be realized by a memory device 702 inside the data collection controller 700B or an auxiliary storage device 703.

The data collection setting transmission unit 7001B transmits (instructs) the setting contents relating to collection of the operation data received from the host controller 700A to the data acquisition unit 7002B and the operation data output portion.

Based on the setting contents relating to data collection instructed from the data collection setting transmission unit 7001B, the data acquisition unit 7002B causes the data storage unit 7003B to record (store) the operation data received from the operation data output portions (the control controller 700C, the driver 770, and the input device 780). Specifically, out of the plurality of types of operation data received periodically from the operation data output portion through the bus B, the data acquisition unit 7002B causes the data storage unit 7003B to sequentially record (store) (a type of) the operation data set as the acquisition target data. In addition, as will be described later, in a case of a configuration in which only the acquisition target data is output from the operation data output portion, the data acquisition unit 7002B causes the data storage unit 7003B to sequentially record (store) the acquisition target data periodically received from the operation data output portion. In this example, the data acquisition unit 7002B is realized by predetermined hardware, for example, a field programmable gate array (FPGA) . The FPGA may perform a process of receiving the data from the operation data output portion and a process of recording the received data in the data storage unit 7003B by using a logic circuit having a hardwired configuration in which physical elements and wires are combined with each other. In this manner, faster data writing to the data storage unit 7003B can be realized. For example, even when the operation data output in the minimum cycle out of the settable operation data is a write target, the operation data can be written on a real-time basis in accordance with the minimum cycle. Therefore, real-time performance (timeliness) of the operation data (information relating to the operation state of the injection molding machine 1) provided for the user through the host controller 700A and the display unit 760 can be more properly guaranteed. Therefore, the user can properly make determination requiring higher real-time performance (for example, determination to stop the injection molding machine 1, based on an abnormality) by using the information relating to the operation state of the injection molding machine 1 which corresponds to the operation data provided on a real-time basis through the display unit 760.

Time-series operation data (acquisition target data) is stored in the data storage unit 7003B.

The data transmission unit 7004B immediately transmits the time-series operation data recorded in the data storage unit 7003B to the host controller 700A.

The control controller 700C includes the data transmission unit 7004C and the data transmission setting unit 7005C.

The data transmission setting unit 7005C performs setting relating to transmission of the control data to the data collection controller 700B by the data transmission unit 7004C, based on the setting contents relating to collection of the data received from the data collection controller 700B. For example, out of the control data periodically output by the control controller 700C, the data transmission setting unit 7005C performs setting to transmit the control data registered in the settable operation data to the data collection controller 700B. In addition, out of the control data periodically output by the control controller 700C, the data transmission setting unit 7005C may performs setting to transmit the control data set as the acquisition target data to the data collection controller 700B. The data transmission setting unit 7005C notifies (instructs) the data transmission unit 7004C of the setting contents.

The data transmission unit 7004C sequentially transmits the control data periodically output by the control controller 700C to the data collection controller 700B through the bus B, based on the setting contents instructed by the data transmission setting unit 7005C. That is, the data transmission unit 7004C may sequentially transmit only the control data set as the acquisition target data to the data collection controller 700B, or may sequentially transmit all control data registered as the settable operation data to the data collection controller 700B. In this example, the data transmission unit 7004C is realized by predetermined hardware, for example, the FPGA. In this manner, the processing load relating to data collection in the CPU 701 of the control controller 700C can be reduced. In addition, the control controller 700C can more quickly perform the process of transmitting the control data to the data collection controller 700B without depending on processing capacity of the software. Therefore, for example, even when the transmission target control data is the control data having the minimum cycle, the control controller 700C can transmit the control data to the data collection controller 700B on a real-time basis in accordance with the minimum cycle. Therefore, real-time performance (timeliness) of the information relating to the operation state of the injection molding machine 1 corresponding to the operation data provided for the user through the host controller 700A and the display unit 760 can be much more properly guaranteed.

The driver 770 includes the data transmission unit 7704.

Based on the setting contents relating to collection of the data received from the data collection controller 700B, the data transmission unit 7704 transmits the driver operation data periodically output by the driver 770 to the data collection controller 700B through the bus B.
The data transmission unit 7704 may sequentially transmit only the driver operation data set as the acquisition target data to the data collection controller 700B, or may sequentially transmit all driver operation data registered as the settable operation data to the data collection controller 700B.

The input device 780 includes the data transmission unit 7804.

Based on the setting contents relating to collection of the data received from the data collection controller 700B, the data transmission unit 7804 transmits the detection data periodically output by the input device 780 to the data collection controller 700B through the bus B. The data transmission unit 7804 may adopt an aspect so that the detection data is sequentially transmitted to the data collection controller 700B only when the detection data is set as the acquisition target data, or may adopt an aspect so that the detection data registered as the settable operation data is sequentially transmitted to the data collection controller 700B at all times.

In this way, in this example, the data collection controller 700B acquires (collects) and records (writes) the operation data by using predetermined hardware (FPGA) . In this manner, the data collection controller 700B can collect the data at a high speed cycle, regardless of the processing capacity of the software. Therefore, the data collection controller 700B can more properly guarantee real-time performance (timeliness) of the operation data (information relating to the operation state of the injection molding machine 1) provided for the user through the host controller 700A and the display unit 760.

The data acquisition (collection) and recording (writing) performed by the FPGA may be applied to the injection molding machine 1 in which the control controller 700C is used for both the control function and the data collection function which relate to the molding operation. That is, the data acquisition (collection) and recording (writing) performed by FPGA may be applied to the injection molding machine 1 when the data collection controller 700B is omitted.

### <Other Examples of Method of Collecting Data relating to Injection Molding Machine and Method of Providing Data for User>

The operation data collected in the data storage unit 7003A (data storage unit 7003B) of the first example or the second example described above may be transmitted to the external management device 2 of the injection molding machine 1 or the user terminal 3 through the communication line NW. In this case, instead of or in addition to the display unit 760, the operation data collected in the data storage unit 7003a (data storage unit 7003B) may be displayed on the display unit provided in the management device 2 or the display unit provided in the user terminal 3. In this manner, for example, even when the user is located at a place relatively away from the injection molding machine 1, the user can confirm the information relating to the operation state of the injection molding machine 1 which corresponds to the operation data collected by the injection molding machine 1 through the display unit of the management device 2 or the user terminal 3.

In addition, the data collection setting screen of the first example or the second example (for example, the data collection setting screens 3000, 4000, and 5000) may be displayed on the display unit of the management device 2 or the user terminal 3 instead of or in addition to the display unit 760. In this case, the functions of the data collection setting unit 7001A and the setting screen display processing unit 7002A are relocated or additionally installed in the management device 2 or the user terminal 3. In this manner, even when the user is located at a place relatively away from the injection molding machine 1, the user can perform setting relating to data collection of the injection molding machine 1 through the input device of the management device 2 or the user terminal 3. In addition, the user can perform setting relating to collection of the operation data of each of the plurality of injection molding machines 1 by using the data collection setting screen displayed on the display unit of the management device 2. In addition, while the user confirms the information indicating a state of the processing load relating to data collection or the information relating to whether or not the candidate data can be acquired, which are displayed on the data collection setting screen of the display unit of the management device 2, the user can perform setting relating to data collection of each of the plurality of injection molding machines 1.

For example, the data collection setting unit 7001A may perform setting relating to collection of the operation data of the injection molding machine 1, in response to a signal requesting the setting received from the management device 2 or the user terminal 3. In this manner, the user of the management device 2 or the user or the user terminal 3 can collectively perform setting relating to collection of the operation data in each of the plurality of injection molding machines 1, through the management device 2 or the user terminal 3.

In addition, for example, the communication device (for example, the interface device 704) of the injection molding machine 1 may transmit a state of the processing load relating to data acquisition to the management device 2, in response to a request from the management device 2, in a case where the acquisition target data is set by the data collection setting unit 7001A. In addition, the communication device of the injection molding machine 1 may transmit the acquisition availability information of the candidate data designated by the request from the management device 2 or the acquisition target data at the candidate timing to the management device 2, in response to the request from the management device 2, in a case where the acquisition target data is set by the data collection setting unit 7001A. In this manner, the management device 2 or the user terminal 3 can cause the data collection setting screen of the display unit to display the information relating to the processing load relating to data collection in the injection molding machine 1 or the acquisition availability information.

### [Operation]

Next, an operation of the injection molding machine system SYS (data collection controller 700B and injection molding machine 1) according to the present embodiment will be described.

In the present embodiment, the data collection controller 700B includes the data acquisition unit 7002B that acquires the data (operation data) relating to the operation state of the injection molding machine 1 which is output by the operation data output portion, and that records the acquired data in the data storage unit 7003B. Then, the data collection controller 700B is provided separately from the control controller 700C that controls the operation of the injection molding machine 1.

In this manner, the data collection controller 700B can concentrate on the process relating to data collection. Therefore, the data collection controller 700B can acquire a relatively large number of types of operation data. Therefore, when there is a type of the operation data which the user wants to collect (acquire) as the acquisition target data, the user can more easily set the acquisition target data.

In addition, in the present embodiment, the data acquisition unit 7002B of the data collection controller 700B may acquire the operation data output by the operation data output portion and accumulated inside the operation data output portion later from the operation data output portion. For example, the data acquisition unit 7002B of the data collection controller 700B may acquire the acquisition target data selected from the operation data output by the operation data output portion, from the operation data output portion. Specifically, the data acquisition unit 7002B of the data collection controller 700B may acquire the operation data selected by the operation data output portion and accumulated in the operation data output portion when a predetermined condition as acquisition target data (trigger condition) is satisfied.

In this manner, the process relating to collection of operation data is distributed not only to the data collection controller 700B but also to the whole system including the operation data output portion. Therefore, the processing load of the data collection controller 700B can be relatively reduced, and the data collection controller 700B can acquire more types of the operation data. Therefore, when there is a type of the operation data which the user wants to collect (acquire) as the acquisition target data, the user can more easily set the acquisition target data.

In addition, in the present embodiment, the data acquisition unit 7002B may include hardware for acquiring the operation data and recording the data in the data storage unit 7003B. For example, the data acquisition unit 7002B may be configured to mainly include the FPGA that performs the process of receiving the data from the operation data output portion and the process of recording the received data in the data storage unit 7003B by using a logic circuit having a hardwired configuration in which physical elements and wires are combined with each other.

In this manner, the data collection controller 700B can collect the data at a high speed cycle, regardless of the processing capacity of the software. Therefore, the data collection controller 700B can more properly guarantee real-time performance (timeliness) of the operation data (information relating to the operation state of the injection molding machine 1) provided for the user through the host controller 700A and the display unit 760.

In addition, in the present embodiment, the operation data output portion may include at least one of the control controller 700C, the driver 770 that drives the actuator of the injection molding machine 1 under the control of the control controller 700C, and the input devices 780 that outputs the detection data relating to the operation state of the injection molding machine 1.

In this manner, specifically, the data collection controller 700B can collect (acquire) the operation data.

In addition, in the present embodiment, the display unit 760 of the injection molding machine 1 displays the state of the processing load relating to data acquisition, in response to the request of the user, in a case where the data collection setting unit 7001A performs setting relating to the acquisition target data. Specifically, the display unit 760 displays the state of the processing load of the processor (CPU701) corresponding to the data acquisition unit 7002B, in response to the request of the user, in a case where the data collection setting unit 7001A performs setting relating to the acquisition target data. The same may apply to the display unit of the management device 2 or the user terminal 3.

In this manner, the injection molding machine system SYS can prompt the user to identify how much is the processing load relating to data acquisition. Therefore, for example, when there is a type of the operation data which the user wants to collect (acquire) as the acquisition target data, the user can identify the state of the processing load relating to data acquisition, and can identify a possibility of data acquisition. Therefore, the user can more easily set the acquisition target data.

In addition, in the present embodiment, the display unit 760 of the injection molding machine 1 may display the information (acquisition availability information) relating to whether or not by the data acquisition unit 7002B can acquire the candidate data designated by the request of the user or the acquisition target data at the candidate timing, in response to the request of the user, in a case where the data collection setting unit 7001A performs setting relating to the acquisition target data.

In this manner, the user can specifically identify whether or not the acquisition requested candidate data or the acquisition target data at the candidate timing can be acquired. Therefore, the user can more easily set the acquisition target data.

In addition, in the present embodiment, the acquisition availability information of the candidate data may include information (determination material information) relating to the determination material of the user which relates to whether or not the candidate data can be acquired by the data acquisition unit 7002B. Similarly, the acquisition availability information of the acquisition target data at the candidate timing may include information (determination material information) relating to the determination material of the user which relates to whether or not the acquisition target data at the candidate timing can be acquired by the data acquisition unit 7002B.

In this manner, the user can use the determination material information to determine (guess) by himself or herself whether or not the candidate data or the acquisition target data at the candidate timing can be acquired by the data acquisition unit 7002B (data collection controller 700B) .

In addition, in the present embodiment, the determination material information may include information indicating a change in the processing load relating to data collection with respect to the addition (increase) of the candidate data or the addition (increase) of the candidate timing.

In this manner, when the candidate data or the candidate timing is added, the user can confirm how the processing load of the data collection controller 700B is changed. Therefore, specifically, the user can determine (guess) by himself or herself whether or not the data acquisition unit 7002B (data collection controller 700B) can acquire the candidate data or the acquisition target data at the candidate timing.

In addition, in the present embodiment, the acquisition availability information of the candidate data may include information for specifying whether or not the candidate data can be acquired by the data acquisition unit 7002B (data collection controller 700B). Similarly, the acquisition availability information of the acquisition target data at the candidate timing may include information for specifying whether or not the acquisition target data at the candidate timing can be acquired by the data acquisition unit 7002B (data collection controller 700B).

In this manner, the user can more easily identify whether or not the acquisition requested candidate data or the acquisition target data at the candidate timing can be acquired.

In addition, in the present embodiment, in view of the processing load of the processor (for example, the CPU701) corresponding to the data acquisition unit 7002B, the data collection setting unit 7001A may set the candidate data or the candidate timing designated by the request of the user, as the acquisition target data or the acquisition target timing.

In this manner, the injection molding machine 1 can automatically consider the processing load of the processor corresponding to the data acquisition unit 7002B, and can set the data (candidate data) which the user wants to acquire (collect), as the acquisition target. Therefore, the user can more easily set the acquisition target data.

### [Modifications and Changes]

Hitherto, the embodiments have been described. However, the present disclosure is not limited to the above-described embodiments. Various modifications and changes can be made within the scope of the invention defined by the appended claims.

For example, in the above-described embodiment, the method of collecting the data relating to the injection molding machine 1 and the method of providing the data for the user have been described. However, the same method may be applied to other industrial machines. For example, other industrial machines include stationary machines installed in factories, such as machine tools and production robots. In addition, for example, other industrial machines include mobile work machines. For example, the mobile work machines include construction machines such as excavators and bulldozers, agricultural machines such as combine harvesters, and transport machines such as mobile cranes and forklifts.

### Reference Signs List

1 Injection molding machine (industrial machine)
2 Management device (external device)
3 User terminal(terminal device)
100 Mold clamping unit
200 Ejector unit
300 Injection unit
400 Moving unit
700 Control unit
700A Host controller
700B Data collection controller (industrial machine controller, first controller)
700C Control controller (second controller, data output portion)
701 CPU (processor)
750 Operation unit
760 Display unit
770 Driver (data output portion)
780 Input device (data output portion)
7001A Data collection setting unit (setting unit)
7002B Data acquisition unit
7003B Data storage unit(storage unit)
SYS Injection molding machine system

## Claims

1. An injection molding machine system (SYS) comprising:
an injection molding machine having
a mold clamping unit adapted to perform mold clamping on a mold unit,
an injection unit adapted to fill the mold unit on which the mold clamping is performed by the mold clamping unit with a molding material,
an ejector unit adapted to extract a molding product from the mold unit after the molding material filled by the injection unit is cooled and solidified, and
a control unit (700) including a data acquisition unit (7002B) adapted to acquire target data from data relating to an operation state output by the injection molding machine itself, and to record the target data in a storage unit (7003A), and a setting unit (7001A) adapted to set the target data in response to a request from a user; and
a display unit (760)
**characterized in that**,
in a case where the setting unit sets the target data in response to the request of the user, the display unit is adapted to display a state of a processing load relating to data acquisition before and after the target data is set, or either before or after the target data is set.

2. The injection molding machine system according to claim 1,
wherein in the case where the setting unit (7001A) sets the target data in response to the request of the user, the display unit (760) is adapted to display information relating tc whether or not candidate data designated by the request can be acquired by the data acquisition unit (7002B).

3. The injection molding machine system according to claim 2,
wherein the information relating to whether or not the candidate data can be acquired includes information relating to a determination material of the user for determining whether or not the candidate data can be acquired by the data acquisition unit (7002B).

4. The injection molding machine system according to claim 3,
wherein the information relating to the determination material includes information indicating a change in the processing load when the candidate data is added.

5. The injection molding machine system according to claim 2,
wherein the information relating to whether or not the candidate data can be acquired includes information that specifies whether or not the candidate data can be acquired by the data acquisition unit (7002B).

6. The injection molding machine system according to claim 1,
wherein the control unit (700) includes a first controller (700B) including the data acquisition unit, and a second controller (700C) adapted to control a molding operation of the own injection molding machine which includes an operation of the mold clamping unit, the injection unit, and the ejector unit.

7. The injection molding machine system according to claim 1,
wherein the state of the processing load relating to the data acquisition includes information relating to a processing load of a processor corresponding to the data acquisition unit (7002B), and
the setting unit (7001A) is adapted to set candidate data designated by the request as the target data, in view of the processing load of the processor.

8. The injection molding machine system according to claim 1,
wherein the display unit (760) is provided in at least one of the injection molding machine (1), an external device (2) communicatively connected to the injection molding machine and serving as a host device of the injection molding machine, and a terminal device communicatively connected to the injection molding machine and usable by the user.

## Patentansprüche

1. Spritzgießmaschinensystem (SYS), umfassend:
eine Spritzgießmaschine mit
einer Formschließ-/klemmeinheit, die ausgestaltet ist, Formschließen-/klemmen an einer Formeinheit durchzuführen,
eine Einspritzeinheit, die ausgestaltet ist, die Formeinheit, an der das Formschließen-/klemmen durch die Formschließ-/klemmeinheit durchgeführt wird, mit einem Formmaterial zu befüllen,
eine Auswerfereinheit, die ausgestaltet ist, ein Formprodukt aus der Formeinheit zu entnehmen, nachdem das durch die Einspritzeinheit eingefüllte Formmaterial abgekühlt und verfestigt ist, und
eine Steuereinheit (700), die eine Datenerfassungseinheit (7002B) enthält, die ausgestaltet ist, Solldaten aus Daten zu erfassen, die sich auf einen Betriebszustand beziehen, der von der Spritzgießmaschine selbst ausgegeben wird, und die Solldaten in einer Speichereinheit (7003A) aufzuzeichnen,
und eine Einstelleinheit (7001A), die ausgestaltet ist, die Solldaten in Reaktion auf eine Anforderung von einem Benutzer einzustellen; und
eine Anzeigeeinheit (760),
**dadurch gekennzeichnet, dass** in einem Fall, in dem die Einstelleinheit die Zieldaten als Reaktion auf die Anforderung des Benutzers einstellt, die Anzeigeeinheit ausgestaltet ist, einen Zustand einer Verarbeitungslast bezüglich Datenerfassung vor und nach dem Einstellen der Zieldaten oder entweder vor oder nach dem Einstellen der Zieldaten anzuzeigen.

2. Spritzgießmaschinensystem nach Anspruch 1,
wobei in dem Fall, in dem die Einstelleinheit (7001A) die Zieldaten als Reaktion auf die Anforderung des Benutzers einstellt, die Anzeigeeinheit (760) ausgestaltet ist, Informationen anzuzeigen, die sich darauf beziehen, ob die durch die Anforderung bestimmten Kandidatendaten durch die Datenerfassungseinheit (7002B) erfasst werden können oder nicht.

3. Spritzgießmaschinensystem nach Anspruch 2,
wobei die Informationen, die sich darauf beziehen, ob die Kandidatendaten erfasst werden können oder nicht, Informationen enthalten, die sich auf ein Bestimmungsmaterial des Benutzers zur Bestimmung, ob die Kandidatendaten durch die Datenerfassungseinheit (7002B) erfasst werden können oder nicht, beziehen.

4. Spritzgießmaschinensystem nach Anspruch 3,
wobei die Informationen bezüglich des Bestimmungsmaterials Informationen enthalten, die eine Änderung der Verarbeitungslast anzeigen, wenn die Kandidatendaten hinzugefügt werden.

5. Spritzgießmaschinensystem nach Anspruch 2,
wobei die Informationen, die sich darauf beziehen, ob die Kandidatendaten erfasst werden können oder nicht, Informationen enthalten, die spezifizieren, ob die Kandidatendaten von der Datenerfassungseinheit (7002B) erfasst werden können oder nicht.

6. Spritzgießmaschinensystem nach Anspruch 1,
wobei die Steuereinheit (700) eine erste Steuerung (700B), die die Datenerfassungseinheit enthält, und eine zweite Steuerung (700C) umfasst, die ausgestaltet ist, einen Formvorgang der eigenen Spritzgießmaschine zu steuern, der einen Betrieb der Formschließ-/klemmeinheit, der Einspritzeinheit und der Auswerfereinheit umfasst.

7. Spritzgießmaschinensystem nach Anspruch 1,
wobei der Zustand der Verarbeitungslast in Bezug auf die Datenerfassung Informationen in Bezug auf eine Verarbeitungslast eines der Datenerfassungseinheit (7002B) entsprechenden Prozessors enthält, und
die Einstelleinheit (7001A) ausgestaltet ist, durch die Anfrage als die Zieldaten bestimmten Kandidatendaten im Hinblick auf die Verarbeitungslast des Prozessors einzustellen.

8. Spritzgießmaschinensystem nach Anspruch 1,
wobei die Anzeigeeinheit (760) in mindestens einer von der Spritzgießmaschine (1), einer externen Vorrichtung (2), die kommunikativ mit der Spritzgießmaschine verbunden ist und als eine Host-Vorrichtung der Spritzgießmaschine dient, und einer Endvorrichtung, die kommunikativ mit der Spritzgießmaschine verbunden ist und von dem Benutzer verwendet werden kann, vorgesehen ist.

## Revendications

1. Un système de machine de moulage par injection (SYS) comprenant :
une machine de moulage par injection comprenant
une unité de serrage de moule conçue pour effectuer le serrage d'un moule sur une unité de moule,
une unité d'injection conçue pour remplir l'unité de moule sur laquelle le serrage de moule est effectué par l'unité de serrage de moule, avec un matériau de moulage,
une unité d'éjection conçue pour extraire un produit de moulage de l'unité de moule une fois que le matériau de moulage introduit par l'unité d'injection est refroidi est solidifié et
une unité de contrôle (700) comprenant une unité d'acquisition de données (7002B) conçue pour acquérir des données cibles à partir de données relatives à un état de fonctionnement généré par la machine de moulage par injection elle-même et pour enregistrer les données cibles dans une unité de stockage (7003A),
et une unité de réglage (7001A) conçue pour régler les données cibles en réponse à une requête provenant d'un utilisateur ; et
une unité d'affichage (760),
**caractérisé en ce que**
dans un cas où l'unité de réglage règle les données cibles en réponse à la requête de l'utilisateur, l'unité d'affichage est conçue pour afficher un état d'une charge de traitement relative à l'acquisition de données avant et après que les données cibles soient réglées, ou avant ou après que les données cibles soient réglées.

2. Le système de machine de moulage par injection selon la revendication 1,
dans lequel, dans le cas où l'unité de réglage (7001A) règle les données cibles en réponse à la requête de l'utilisateur, l'unité d'affichage (760) est adapté pour afficher des informations relatives au fait que des données candidates désignées par la requête peuvent être acquises ou non par l'unité d'acquisition de données (7002B).

3. Le système de machine de moulage par injection selon la revendication 2,
dans lequel les informations relatives au fait que des données candidates désignées peuvent être acquises ou non comprennent des informations relatives à un matériel de détermination de l'utilisateur pour déterminer si les données candidates peuvent être acquises ou non par l'unité d'acquisition de données (7002B).

4. Le système de machine de moulage par injection selon la revendication 3,
dans lequel les informations relatives au matériel de détermination comprend des informations indiquant un changement de la charge de traitement lorsque les données candidates sont ajoutées.

5. Le système de machine de moulage par injection selon la revendication 2,
dans lequel les informations relatives au fait que des données candidates désignées peuvent être acquises ou non comprennent des informations qui spécifient si les données candidates peuvent être acquises par l'unité d'acquisition de données (7002B).

6. Le système de machine de moulage par injection selon la revendication 1,
dans lequel l'unité de contrôle (700) comprend un premier contrôleur (700B) comprenant l'unité d'acquisition de données et un deuxième contrôleur (700C) conçu pour contrôler une opération de moulage de sa propre machine de moulage par injection qui comprend un fonctionnement de l'unité de serrage de moule, l'unité d'injection et l'unité d'éjection.

7. Le système de machine de moulage par injection selon la revendication 1,
dans lequel l'état de la charge de traitement relative à l'acquisition de données comprend des informations relatives à une charge de traitement d'un processeur correspondant à l'unité d'acquisition de données (7002B) et
l'unité de réglage (7001A) est conçue pour régler les données candidates désignées par la requête comme les données cibles, compte tenu de la charge de traitement du processeur.

8. Le système de machine de moulage par injection selon la revendication 1,
dans lequel l'unité d'affichage (760) est disposée dans au moins un élément parmi la machine de moulage par injection (1), un dispositif externe (2), connectée de manière communicative à la machine de moulage par injection, et servant de dispositif hôte de la machine de moulage par injection, et un dispositif terminal, connecté de manière communicative, à la machine de moulage par injection et utilisable par l'utilisateur.
